# EUROPEAN PATENT SPECIFICATION

(11) **EP 1 296 219 B1**
(45) Date of publication and mention of the grant of the patent: **08.04.2015**
(21) Application number: 02256344.9
(22) Date of filing: 12.09.2002
(51) Int. Cl.: G06F 3/12

(54) **Print control method, print control apparatus, print control program which can be executed by information processing apparatus, and memory medium in which computer-readable program has been stored**
Druckersteuerungsverfahren, Druckersteuerungsgerät, Druckersteuerungsprogramm, das im Datenverarbeitungsgerät ausgeführt werden kann sowie Speichermedium worin ein durch den Rechner lesbares Programm gespeichert wurde
Procédé de commande d'impression, appareil de commande d'impression, procédé de commande d'impression exécutable par un appareil de traitement d'information, et médium de mémoire dans lequel un programme lisible par ordinateur a été stocké

(30) Priority: 14.09.2001 JP 2001279607; 31.05.2002 JP 2002159789
(43) Date of publication of application: 26.03.2003
(73) Proprietor: CANON KABUSHIKI KAISHA, Tokyo (JP)
(72) Inventor: Morooka, Hidekazu, c/o Canon Kabushiki Kaisha, Tokyo (JP); Kuroda, Shigeki, c/o Canon Kabushiki Kaisha, Tokyo (JP); Tomita, Makoto, c/o Canon Kabushiki Kaisha, Tokyo (JP)
(74) Representative: Hitching, Peter Matthew

(56) References cited:
- EP-A1- 0 893 754
- GB-A- 2 341 698
- JP-A- H10 105 349
- JP-A- H11 232 054
- US-A- 6 088 120

## Description

The invention relates to a print control method and a print control apparatus for executing a printing process in correspondence to a draw command from an application and also relates to a print control program which can be executed by an information processing apparatus and a memory medium in which a computer-readable program has been stored.

### Related Background Art

In recent years, a network apparatus is generally used and a number of personal computers (hereinafter, abbreviated to "PCs") and printers are connected onto the network. In such a network environment, when printing, with respect to a document having a number of pages or a document having a number of copies, in order to shorten a printing time, a system (distribution print system) such that a print job is once spooled, distributed, and outputted page by page or copy by copy to a plurality of printers has been known.

Further, in such a network environment, in order to reduce costs upon printing and shorten a printing time for one document in which color pages and monochromatic pages exist mixedly, a system (color/monochromatic distribution print system) such that the color pages are distributed and outputted to a color printer and the monochromatic pages are distributed and outputted to a monochromatic printer has been known.

Moreover, in such a network environment, a system (multiple address print system) such that one document is simultaneously transmitted to a plurality of printers and printer by one print instruction has been known.

In addition, in such a network environment, a system (error substitute print system) such that for a document transmitted to one printer, if an error occurs in the printer, it is automatically switched to another printer and the document is printed has been known.

In the printing process for a plurality of printers (printer drivers) as targets as described above, a virtual printer driver UI or the like for performing various print settings in the lump to the plurality of printers (printer drivers) has been known.

US6088120 discloses the use of a group printer and member printers, physical printers forming a logical printer.

JP11-232054 describes the setting of a common item for a plurality of printer drivers and setting respective items for the printer drivers.

In a general printer driver, fundamental set information (for example, the number of print copies and permission/inhibition information of a duplex print) which is necessary for an ordinary printing process has been stored in an area called a common area (Public DEVMODE) of driver set information. It has been known that in the information set in such an area, set items can be read out and written even by a different printer vender.

As functions which are peculiar to the printer, for example, a stapling function, a punching function, and a book-binding printing function have been stored in an expansion area (expanded DEVMODE) of the driver set information. It has also been known that in the set information in such an area, a format differs in dependence on the printer vender.

However, in the conventional virtual printer driver for performing print instructions in the lump to a plurality of printer drivers, since providing sources of the printer drivers are different or their characteristics are different, a virtual printer driver which can make the most of functions of the printer drivers is not provided. That is, to a virtual user interface for activating a plurality of printer drivers and instructing printing processes in the lump to them, only a mode for supporting minimum functions provided for printers can be set, so that such a virtual user interface is not a user interface of the virtual printer driver which sufficiently takes into consideration of functions of member printer drivers.

In the user interface of the virtual printer driver as described above, in the case of individually performing a print setting to a plurality of printer drivers and in case of performing a print setting in the lump, since matching performance between both cases is not held, use efficiency for the user is low.

The invention is made in consideration of the above problems and it is an object of the invention to provide a mechanism for providing a user interface of a virtual printer driver in which in printing processes for a plurality of printers (member printer drivers) having different functions as targets, matching performance is obtained and characteristics of the printers are sufficiently reflected and to provide the following constructions.

According to one aspect of the present invention there is provided a print control method as set out in accompanying claim 1.

According to another aspect there is provided a print control apparatus as set out in accompanying claim 7.

According to a further aspect there is provided a print control program as set out in accompanying claim 13. In a yet further aspect there is provided a computer readable memory medium as set out in claim 14.

An embodiment of the invention will now be described, by way of example only, with reference to the accompanying drawings in which:
Fig. 1 is a block diagram for explaining a construction of an information processing system to which an embodiment of the present invention can be applied;
Fig. 2 is a block diagram for explaining a construction of an information processing apparatus of an embodiment of the invention;
Fig. 3 shows an example of a memory map in an RAM 202 shown in Fig. 2;
Fig. 4 shows an example of a memory map in an FD 204 shown in Fig.2;
Fig. 5 is a diagram showing a relation of the FD 204 which is inserted into an FD drive 203 shown in Fig. 2;
Fig. 6 is a block diagram for explaining a construction of print control modules of the information processing apparatus of an embodiment of the invention;
Fig. 7 shows an example of a data structure of job information which is managed by a print server;
Fig. 8 is a diagram showing an example of a structure of a general print file;
Fig. 9 is an operation flowchart for a group printer driver;
Fig. 10 is a table showing a correspondence between constructions of member printer drivers and items which can be set;
Fig. 11 shows an example of set items which are classified into common set items and expansion set items;
Fig. 12 is a diagram for explaining a mechanism of a conflicting process of the group printer driver;
Fig. 13 is an operation flowchart for the group printer driver;
Fig. 14 is an operation flowchart for the group printer driver;
Fig. 15 is an operation flowchart for the group printer driver;
Fig. 16 is diagram showing an example of a display state of a group printer driver UI subjected to a displaying process to which the conflicting process has been reflected;
Fig. 17 is diagram showing an example of a display state of the group printer driver UI subjected to the displaying process to which the conflicting process has been reflected;
Fig. 18 is an operation flowchart for the group printer driver;
Fig. 19 is a correspondence table of a
   construction of member printer drivers and items which can be set;
Fig. 20 is an operation flowchart for the group printer driver;
Fig. 21 is an operation flowchart for the group printer driver; and
Fig. 22 is an operation flowchart for the group printer driver.

A preferred embodiment to which the invention is applied will be described hereinbelow.

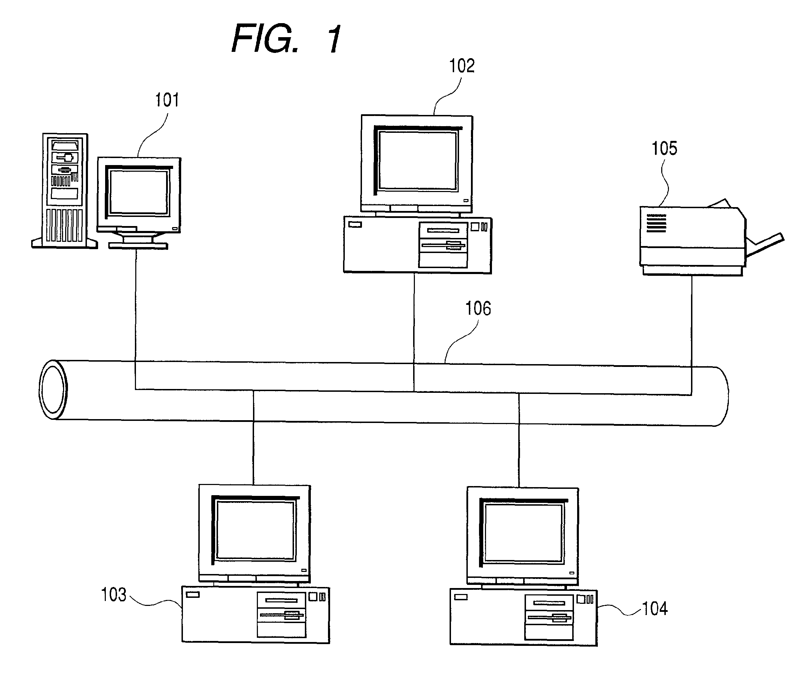

Fig. 1 is a block diagram for explaining a construction of an information processing system to which the embodiment of the invention can be applied. It is presumed that in the present system, one or a plurality of client computers are connected.

In the diagram, reference numerals 102, 103, and 104 denote information processing apparatuses serving as client computers (clients). These client computers are connected to a network 106 by a network cable such as Ethernet (registered trademark) or the like and can execute various programs such as an application program and the like. A printer driver having a function for converting print data into a printer language which corresponds to a printer or can be interpreted has been installed in each information processing apparatus. It is assumed that the printer driver in the invention supports a plurality of printer drivers as will be explained in detail hereinlater.

Reference numeral 101 denotes an information processing apparatus serving as a server (hereinafter, referred to as a print server) in the embodiment. The print server 101 is connected to the network 106 by the network cable, accumulates files which are used by the network, and monitors a use status of the network 106. The print server 101 has a function for managing a plurality of printers connected to the network 106.

As a construction, the clients 102 to 104 and the print server 101 are general information processing apparatuses. Print control programs each for making different control have been stored in the clients and the print server so that they can be executed.

The print server 101 is the general information processing apparatus and can also have the functions of the clients 102 to 104.

The print server 101 in the embodiment further has a function such that print jobs including print data whose print request has been issued from the client computers 102, 103, and 104 are stored and the print data is printed, or only job information including no print data is received from the client computers 102, 103, and 104, printing order of sending the print data to the printers of the client computers 102, 103, and 104 is managed, and the client whose printing order has come is notified of permission of transmission of the print job including the print data, or various information such as status and print job of a network printer 105 is obtained and notified to the client computers 102, 103, and 104, respectively.

Reference numeral 105 denotes the network printer serving as a print control apparatus which is connected to the network 106 via a network interface (not shown). The network printer 105 analyzes the print job including the print data which is transmitted from the client computer or print server 101, converts it into a dot image, and prints the print data every page. Reference numeral 106 denotes the network connected to the client computers 102, 103, and 104, server 101, network printer 105, and the like so that communication can be made.

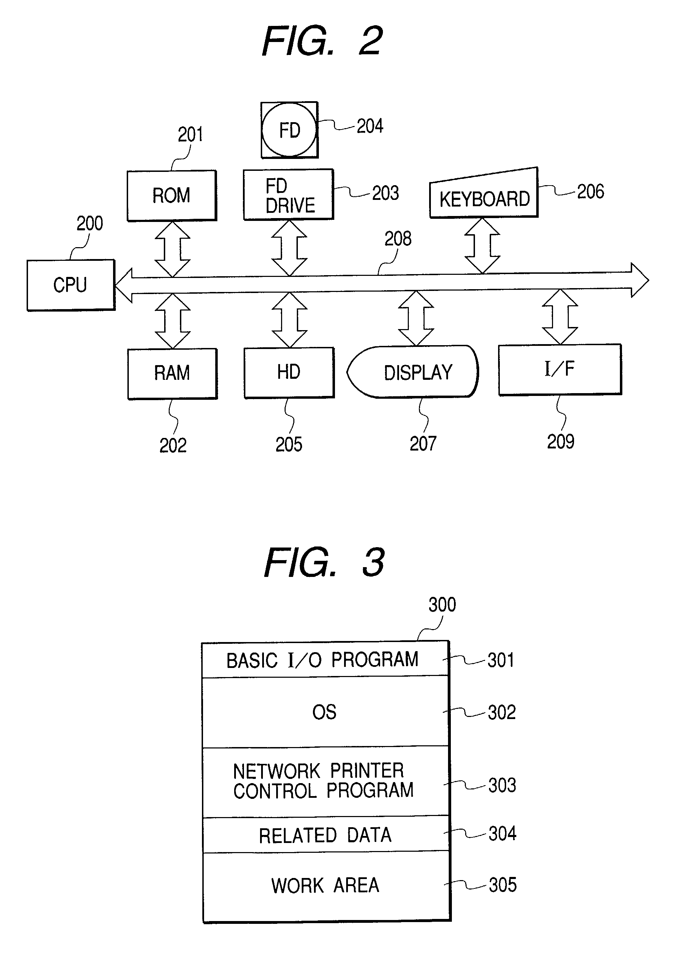

Fig. 2 is a block diagram for explaining a construction of the information processing apparatus of the embodiment of the invention. Each of the client computers 102, 103, and 104 as information processing apparatuses also has the same construction as that shown in the diagram. Further, the server 101 also has a hardware construction which is similar or substantially equivalent to that shown in the diagram. Therefore, an explanation will be made on the assumption that Fig. 2 is a block diagram for explaining the construction of the clients and server.

In Fig. 2, reference numeral 200 denotes a CPU as control means of the information processing apparatus. The CPU 200 makes control in a manner such that an application program, a printer driver program, an OS, a network printer control program of the invention, or the like which has been stored in a hard disk (HD) 205 is executed and information, files, and the like which are necessary to execute the program are temporarily stored into an RAM 202.

Reference numeral 201 denotes an ROM as storing means. Programs such as a basic I/O program and the like and various data such as font data, data for template, and the like which are used for a document process are stored in the ROM 201. Reference numeral 202 denotes the RAM as temporary storing means. The RAM 202 functions as a main memory, a work area, or the like of the CPU 200.

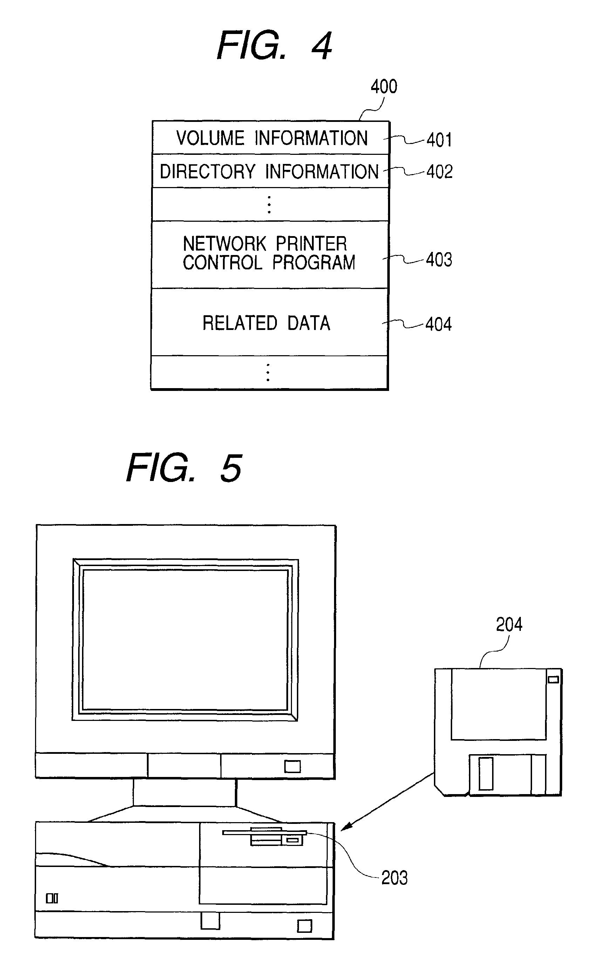

Reference numeral 203 denotes a floppy (registered trademark) disk (FD) drive as memory medium reading means. A program or the like stored in an FD 204 as a memory medium can be loaded into the computer system via the FD drive 203 as shown in Fig. 5, which will be explained hereinlater. The memory medium is not limited to the FD but an arbitrary medium such as CD-ROM, CD-R, CD-RW, PC card, DVD, IC memory card, MO, memory stick, or the like can be used.

Reference numeral 204 denotes the floppy (R) disk (FD) as a memory medium in which a computer-readable program has been stored.

Reference numeral 205 denotes one of external storing means and indicates the hard disk (HD) which functions as a memory having a large capacity. The application program, printer driver program, OS, network printer control program, related program, and the like have been stored on the HD 205. Further, a spooler as spooling means is held in the HD 205. The spooling means is a client spooler in case of the client and a server spooler in case of the print server. The job information received from the clients is stored in the print server and a table for making order control is also formed and stored in the external storing means.

Reference numeral 206 denotes a keyboard as instruction input means. The user instructs the client computer to input a command such as a control command or the like of a device by the keyboard 206, or the operator or the administrator instructs the print server to input the command such as a control command or the like of the device by the keyboard 206.

Reference numeral 207 denotes a display as display means for displaying the command inputted from the keyboard 206, a status of the printer, or the like.

Reference numeral 208 denotes a system bus for controlling a flow of data in the computer serving as a client or a print server.

Reference numeral 209 denotes an interface as input/output means. The information processing apparatus transmits and receives data to/from an external apparatus via the interface 209.

Fig. 3 is a diagram showing an example of a memory map in the RAM 202 shown in Fig. 2. This diagram shows the memory map in a state where the network printer control program which is loaded from the FD 204 is loaded into the RAM 202 and can be executed.

In the embodiment, this diagram shows an example in which the network printer control program and related data are directly loaded from the FD 204 into the RAM 202 and executed. However, as another example, each time the network printer control program is made operative from the FD 204, such a program can be also loaded into the RAM 202 from the HD 205 on which the network printer control program has already been installed.

The medium for storing the network printer control program is not limited to the FD but a medium which can store information, such as CD-ROM, CD-R, PC card, DVD, IC memory card, or the like can be also applied. Further, it is also possible to construct in a manner such that the network printer control program is stored in the ROM 201 and constructed as a part of the memory map and is directly executed by the CPU 200.

Software for realizing functions similar to those of the foregoing apparatuses can be also substituted for the hardware apparatuses.

The network printer control program is also simply referred to as a print control program. The print control program includes a program for making control so as to allow the client to instruct a change in print destination of the print job or a change in printing order. The print control program also includes a program for allowing the print server to make order control of the print jobs or make a notification of a print end, a request for changing the print destination, or the like of the print job. In the print control program of the invention for making such control, a module which is installed in the client and a module which is installed in the print server can be also separately provided. Or, it is also possible to construct in a manner such that one print control program functions as a program for the clients or a program for the print server in accordance with an environment where it is executed. Or, it is also possible to construct in a manner such that both of a module having the function for the client and a module which functions as a program for the print server are installed into one computer, and they are simultaneously made operative or time-divisionally made operative in parallel in a pseudo manner.

Reference numeral 301 denotes a basic I/O program. A program having an IPL (Initial Program Loading) function such that when a power source of the control apparatus is turned on, the OS is read out from the HD 205 and stored into the RAM 202 and the operation of the OS is started, or the like has been stored in an area of the basic I/O program 301.

Reference numeral 302 denotes an operating system (OS); 303 a network printer control program which is stored in an area held on the RAM 202; 304 related data which is stored in an area held on the RAM 202; and 305 a work area in which an area where the CPU 200 executes the print control program is held.

Fig. 4 is a diagram showing an example of the memory map in the FD 204 shown in Fig. 2.

In Fig. 4, reference numeral 400 denotes data contents in the FD 204; 401 volume information showing information of the data; 402 directory information; 403 a network printer control program as a print control program, which will be explained in the embodiment; and 404 its related data. The network printer control program 403 is a program based on flowcharts, which will be explained in the embodiment. In the embodiment, both of the client and the server have a similar construction.

Fig. 5 is a diagram showing a relation of the FD 204 which is inserted into the FD drive 203 shown in Fig. 2. In Fig. 5, the same component elements as those in Fig. 2 are designated by the same reference numerals.

In Fig. 5, the network printer control program and related data, which will be explained in the embodiment, have been stored in the FD 204.

A print job control system for executing a print process such as distribution, multiple address, or substitution mentioned above by using a plurality of printers in the embodiment will now be described.

In the embodiment, a printer for virtually binding a plurality of printers as one printer is called a group printer, and the printers which are bound are called member printers. A printer driver corresponding to the group printer is called a group printer driver. A printer driver corresponding to the member printer is called a member printer driver.

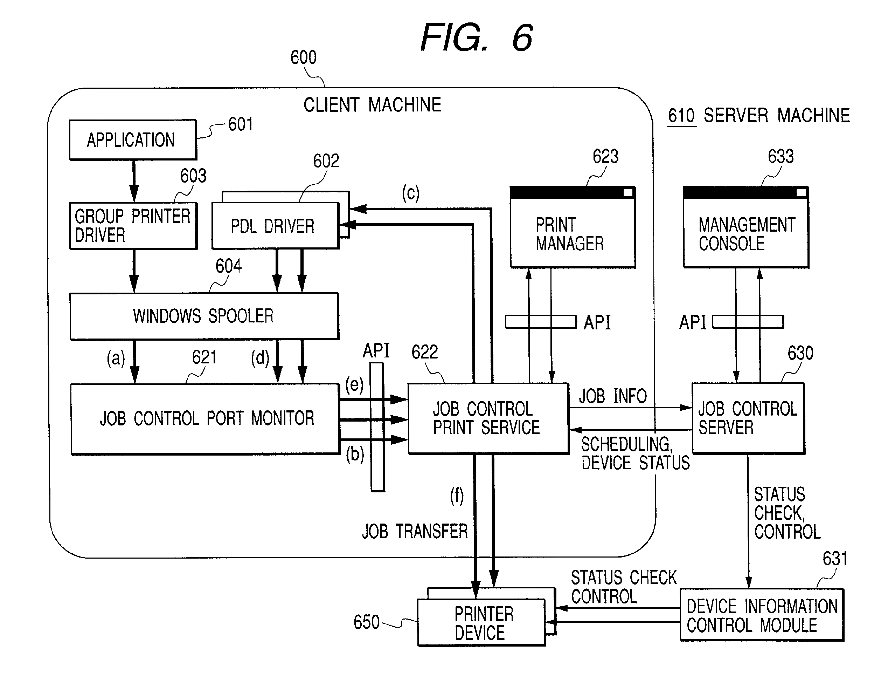

Fig. 6 is a diagram showing a manner by which a print job issued from a general application such as "Microsoft Word" (registered trademark) or the like in the client server model of the present system is processed in the print job control system. In Fig. 6, reference numeral 600 denotes a client machine in which the client module of the print job control system operates.

Usually, when the print is instructed, the application program forms a series of draw commands and transfers them to a Windows (R) spooler via the printer driver. The Windows (R) spooler takes a procedure for transferring print job data to a port monitor selected by the user and transmitting it to a printer device.

In the embodiment, the user preliminarily designates a port monitor 621 for the print job control system (hereinafter, it is abbreviated to a job control port monitor in the embodiment) and instructs the print. An application program 601 forms a series of draw commands. A group printer driver 603 which received the draw commands forms a general print file and transmits it as print job data to the job control port monitor 621 instead of a port monitor which transmits the print job data to the printer device. The job control port monitor 621 does not transmit the print job data to a printer device 650 but transmits it to a print service 622 for the print job control system (hereinafter, it is abbreviated to a job control print service in the embodiment). The job control print service 622 executes a print job control process, as will be explained hereinlater, to the print job data.

A print manager 623 for the print job control system (hereinafter, it is abbreviated to a job control print manager in the embodiment) is a program for allowing the user to examine in which status the print job is in the job control print service 622 or providing a user interface (UI) for operating the print job.

The job control print manager 623 transmits and receives information and instructions to/from the job control print service 622 via an interface (API) of software of the job control print service 622.

A server 630 for the print job control system (hereinafter, it is abbreviated to a job control server in the embodiment) concentratedly controls (schedules) timing when the job control print service 622 on each client 600 transmits the print job data to the printer device 650.

A management console 633 for the print job control system (hereinafter, it is abbreviated to a job control management console in the embodiment) can monitor the whole print job control system by transmitting and receiving information and instructions to/from the job control server 630 via the API for allowing software which the job control server 630 has to access.

The job control server 630 communicates with each printer device 650 by using a device information control module 631, obtains information regarding the print job and an operation mode in each printer, and executes the operation. The obtained information can be transferred to the job control print service 622 on the client 600 side.

A print from the group printer driver 603 in the embodiment will be described hereinbelow.

The group printer driver 603 converts the series of draw commands formed by the application program into the general print file as a file of an intermediate format which does not depend on the kind of printer device, OS, or the like. A construction of the general print file will be explained hereinlater.

As mentioned above, this general print file is guided from a Windows (R) spooler 604 via the job control port monitor 621 (a) to the job control print service 622 (b). In accordance with a kind of job control which is made to the print job, the job control print service 622 forms a draw command on the basis of the general print file (c). Subsequently, a PDL driver 602 converts the draw command into a PDL file which can be interpreted by the printer device 650. Fig. 6 shows the example in which job control for dividing the print job into two jobs is executed to such a print job by the job control print service 622. Examples in which two member jobs were formed are shown by two arrows (c). The PDL file formed by the PDL driver 602 is transmitted via the Windows (R) spooler 604 and the job control port monitor 621 (d) and again transferred to the job control print service 622 (e). The job control print service 622 transmits the print job data of the PDL to the printer device 650 in accordance with an instruction of the job control server 630 (f).

In accordance with an instruction of a print instruction text in the general print file, the job control print service 622 logically divides one general print file into a plurality of print jobs, transmits them to different printer devices, or retransmits the print job data which was once transmitted to another printer device. Reference characters (c), (d), (e), and (f) in Fig. 6 show a path of the print job data in such a case.

In the case where application software forms a general print file and the application software directly inputs the general print file as a print job, a method of transferring information to the group printer driver 603 and process contents in the group printer driver 603 are different from those of a general application. As mentioned above, in case of the general application, when draw information is transferred to the group printer driver 603, the application calls a GDI function of Windows (R) in a manner similar to that of the ordinary printer driver and the group printer driver 603 forms a general print file in accordance with the GDI function. On the other hand, in case of an application for directly forming a general print file, the application has already had the general print file and supplies it to the group printer driver 603. The group printer driver 603 rewrites a print instruction text in the general print file on the basis of a preset printing method as necessary and sends it to the Windows (R) spooler 604.

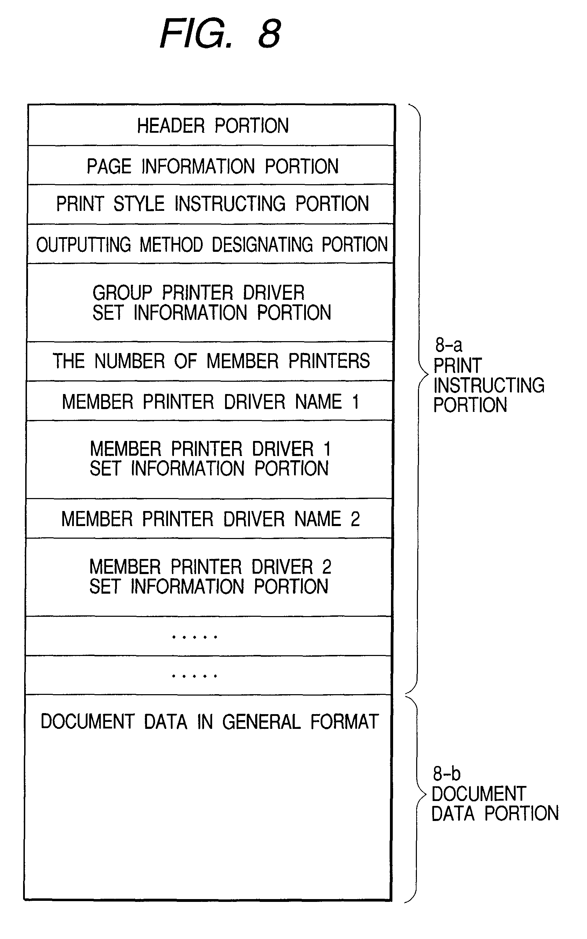

Fig. 8 is a diagram showing an example of a construction of a general print file.

The general print file which is used in the embodiment comprises a print instructing portion 8-a and a document data portion 8-b. The print instructing portion is a portion describing information of a document and a print instruction. The document data is data obtained by converting data of the document of the application into data in a general format and has a data format which does not depend on a printer language.

The print instructing portion is constructed by a header portion, a page information portion, a print style instructing portion, an outputting method designating portion, a group printer driver set information portion, the number of member printers, a member printer driver name, a member printer driver set information portion, and the like.

The header portion is a portion to store information such as version identification, file information, and the like of the file.

The page information portion is a portion to store information such as the number of pages of the document data in the document data portion 8-b, size of each page, and the like.

The print style instructing portion is a portion to store information regarding an output style, such as print page range, the number of print sheets, layout information (N-UP, book-binding print, etc.) of the document data, stapling instruction, punching instruction, and the like.

The outputting method designating portion is a portion to store information such as distribution print, color/monochromatic distribution print, substitute print, multiple address print, and the like as an outputting method.

The group printer driver set information portion is a portion to store set information of a UI of a group printer driver, which will be explained hereinlater.

The number of member printers is a portion to store the number of member printers to which the group printer driver has been made to correspond.

The member printer driver name is a portion to store a name of the printer driver of the member printer.

The member printer driver set information portion is a portion to store, for example, DEVMODE information as set information of a driver UI of the member printer.

Each of the member printer driver name and the member printer driver set information portion has storing areas of the number stored in the portion of the number of member printers mentioned above.

In the group printer driver 603 described in Fig. 6 mentioned above, when the general print file is formed, set contents on the group printer driver GUI are recorded into the print instructing portion 8-a. Further, the group printer driver 603 converts the data received by the GDI into the general data and records it as document data into the document data portion of the general print file.

The present file can be also replaced with a file in which the print instructing portion 8-a and the document data portion 8-b are different. In such a case, the print instructing portion exists as a print instruction text file, the document data portion exists as a document data file, and they can be also bound in one archive format and similarly handled like one file.

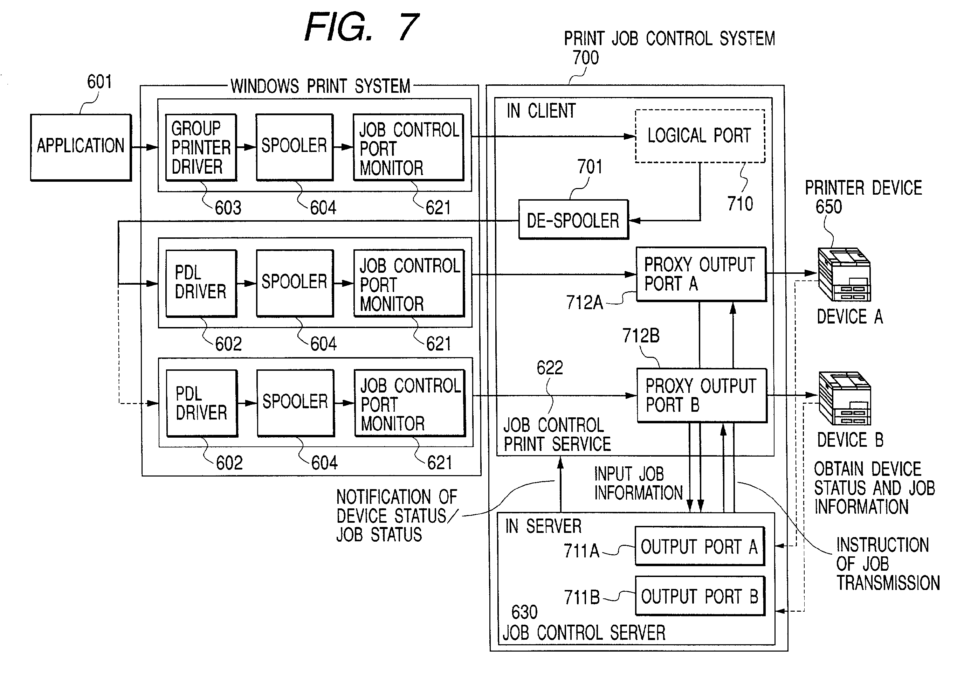

The print system which is provided by Windows (R), the relation of the print jobs in a print job control system, and an outline of processes in Fig. 7 will be described further in detail.

In Fig. 7, a print job control system 700 shows a range of the print job control system over physical machines in which the control program for the server and the client operate. An output port 711 (711A, 711B) managed by the server is allowed to correspond to a proxy output port 712 (712A, 712B) of the job control print service 622 of the client and integratedly manages all proxy output ports on each client allowed to correspond to one port. In the embodiment, actual print job data is held in the proxy output port 712 of each client. The job control server 630 does not execute a transmitting process of the print job data itself but issues only a transmitting instruction of the print job to the job control print service 622. In accordance with this instruction, the job control print service 622 transmits the print job data to the printer device 650.

Subsequently, processes in the case where the print job control system 700 executes a print with an additional value such as substitute print, distribution print, multiple address print, or the like will be described.

In the case where the print job control system 700 executes a print with an additional value such as substitute print, distribution print, multiple address print, or the like, the user or the application 601 has to issue the print job to the printer to which the group printer driver 603 has been allocated. The job control print service 622 receives the job data processed by the group printer driver 603 as a general print file via the job control port monitor 621. The job control print service 622 receives this job and issues a job (member job) to another printer to which the PDL driver has been allocated via a despooler 701, thereby allowing the printer to print. At this time, the despooler 701 interprets the print instructing portion 8-a of the general print file described in Fig. 8 mentioned above, modifies the document data in the document data portion 8-b, converts it into the GDI of Windows (R), instructs each printer driver to print, and issues the print job. For example, if an instruction of 2-UP has been recorded in the print style instructing portion, the document data of two pages is reduced and arranged (reduction layout) onto one sheet of paper. In case of the distribution print or the multiple address print, the jobs are issued to a plurality of member printers described in the print instructing portion 8-a in accordance with those set contents. In case of the substitute print, when substituting conditions are satisfied, member jobs are issued in accordance with the previous set contents in case of the automatic substitution and are issued in accordance with the operation of the user in case of the manual substitution.

When the job is issued to each member printer, the despooler 701 needs to form DEVMODE of each member printer as a print instruction corresponding to the member printer driver. However, this DEVMODE is formed by properly reflecting the contents disclosed in the print instructing portion 8-a to the DEVMODE of each member printer.

The job control print service 622 on the client side receives the PDL data of each member job which has been rendered by the PDL driver 602 via the job control port monitor 621, notifies the server side of information regarding the received job, and temporarily holds the job data into its own proxy output port 712. After that, the job control print service 622 receives a transmitting instruction from the job control server 630 and, subsequently, transmits it to the printer device 650.

### (First embodiment)

An explanation will be made with respect to UI control of the printer driver for the print job control system for executing a printing process such as distribution, multiple address, or substitution by using a plurality of printers having printer drivers with memory areas such as common set area and expansion set area in the embodiment.

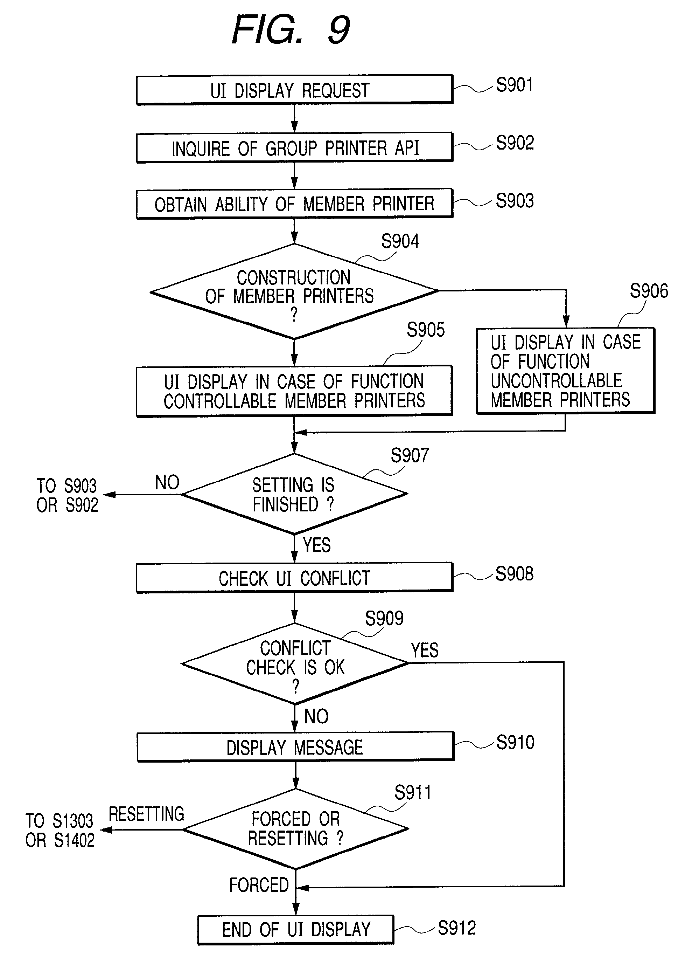

Fig. 9 is a flowchart showing a UI control flow of the group printer driver of the embodiment of the invention.' It is assumed that a process in each step in the flowchart of Fig. 9 is realized by a method whereby the CPU (central processing unit) provided for the information processing apparatus described above reads out a control program stored in a predetermined memory medium such as ROM, FD, hard disk (HD), or the like and executes a process based on the read-out program.

In step S901, when a UI display request to the group printer driver is recognized from the application via the OS, a series of UI display control processes is started.

In step S902, an identification ID of each member printer driver constructing the group printer driver is inquired by using a print job control system API, thereby obtaining the identification IDs of all of the member printer drivers constructing the group printer driver. All of the member printer drivers constructing the group printer indicate the printer drivers which have previously been registered in correspondence to the group printer driver. The identification ID of the member printer driver can be made to correspond to a name allocated when the member printer driver is registered, an identification ID allocated by the program of the group printer driver in correspondence to the registered member printer drivers, or the like.

In step S903, ability of the member printer driver corresponding to the identification ID of each member printer driver obtained in step S902 is obtained. This step corresponds to a process for reading out and discriminating whether the member printer driver is a "function controllable driver" in which the ability of the driver can be obtained up to the expansion set items of the driver set information and the driver UI control can be made or another driver, that is, a "function uncontrollable driver" with respect to all of the member printer drivers constructing the group printer driver. Further specifically speaking, the group printer driver inquires of each member printer driver corresponding to the identification ID. In accordance with a response to the inquiry from the member printer driver, a discrimination of information indicative of function "controllable" or "uncontrollable" regarding whether the driver is the "function controllable driver" or the "function uncontrollable driver" is made. The expansion set items will be explained in detail hereinlater.

In step S904, by which kinds of member printer drivers the member printers are constructed is discriminated from the information about whether the function is controllable or uncontrollable which was read out in step S903. As a result of this discrimination, if it is determined that the group printer driver is constructed only by member printers of the kind of the "function controllable drivers", the processing routine advances to step S905. If it is determined that the group printer driver is constructed by other drivers, that is, if the member printer drivers are constructed mixedly by the "function controllable drivers" and the "function uncontrollable drivers" or only by the "function uncontrollable drivers", the processing routine advances to step S906.

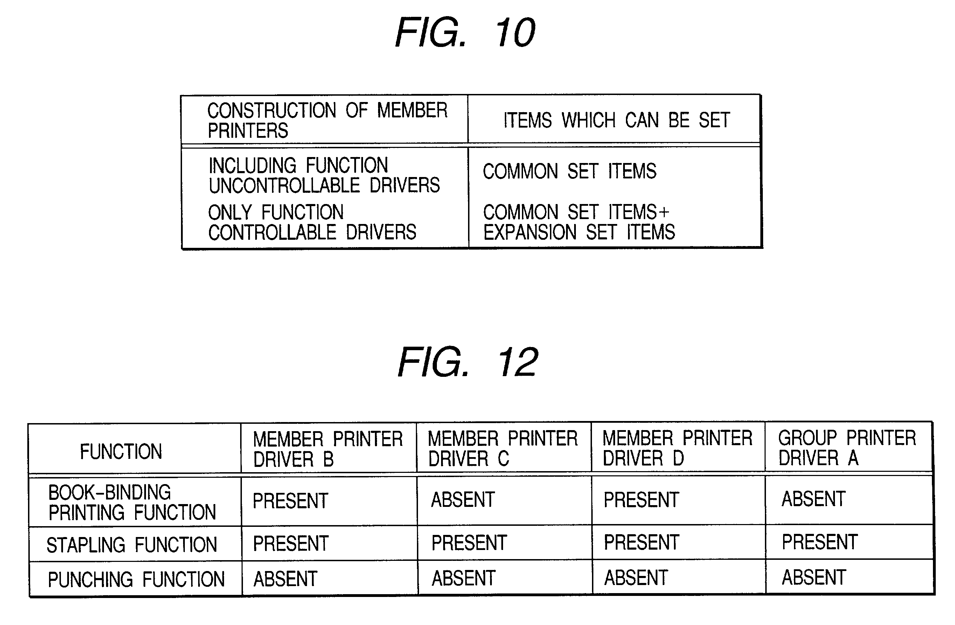

Fig. 10 shows a correspondence between the constructions of the member printers of the invention and items which can be set.

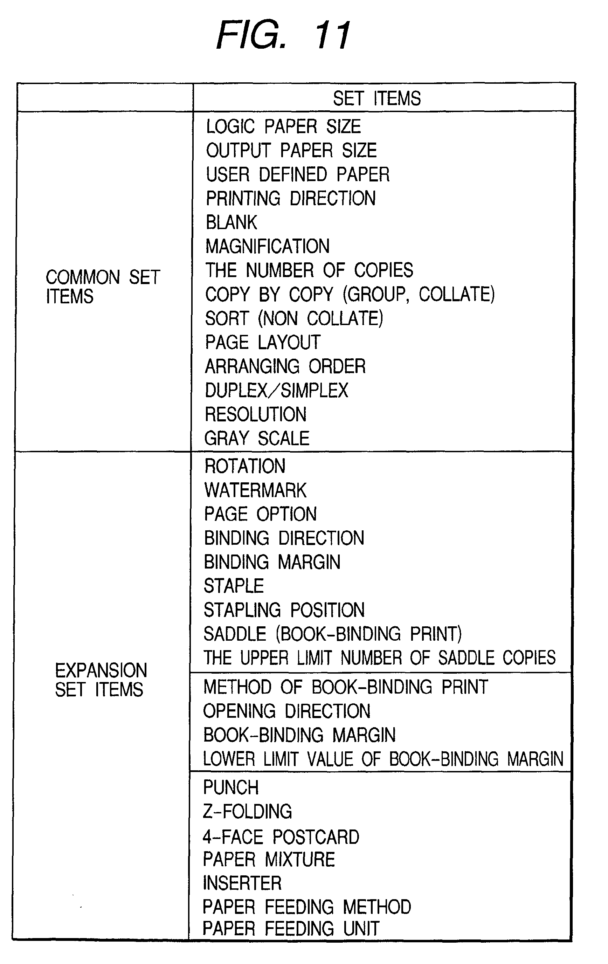

Fig. 11 shows an example of a correspondence between set items corresponding to the common set items and set items corresponding to the expansion set items.

In the present invention, the common set items are classified and specified as items existing in the foregoing common set area, and the expansion set items are classified and specified as items existing in the foregoing expansion set area. Although there is a case where the classification of the set items differs or a case where there is a change in items which can be set in dependence on a difference of the OS by which the print job control system operates, naturally, the UI control flow of the invention is effective.

When explaining Figs. 10 and 11 in other words, the item of each function which is specified in the common set items corresponds to the item which can be inquired by the print control program via the OS irrespective of a difference of a plurality of member printer drivers. The item of each function corresponding to the expansion set items corresponds to the item in which it is not always guaranteed that the print control program inquires via the OS like common set items. For example, ih the printer drivers whose providing sources are different, the items of a classification such that it is not guaranteed that the print control program (group printer driver) recognizes correspond to the expansion set items. The expansion set items correspond to the items such that the providing source of each printer driver uniquely specifies the inquiring mechanism.

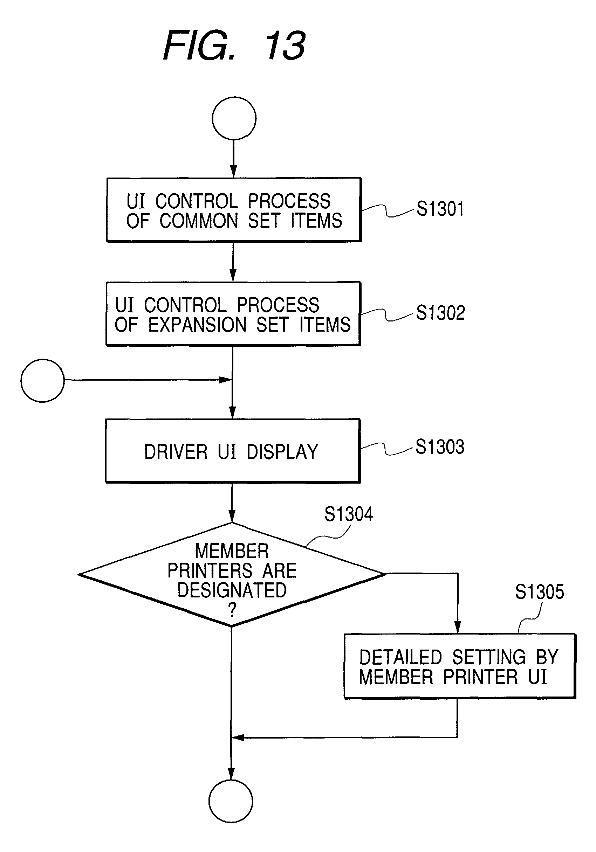

Fig. 13 is a flowchart showing the detailed process of step S905. It is assumed that a process of each step in the flowchart of Fig. 13 is realized by a method whereby a CPU (central processing unit) provided for the information processing apparatus described above reads out a control program stored in a predetermined memory medium (nonvolatile memory means) such as ROM, FD, hard disk (HD), or the like and executes processes based on the read-out program.

First, in step S1301, control is made in a manner such that ability regarding each common set item of each member printer driver is inquired, a conflicting process of the function is executed, and items to be displayed by the group printer driver UI are selected on the basis of a result of the conflicting process.

The conflicting process of the function denotes a process such that the "presence"/"absence" of the function of each set item is discriminated (checked) with respect to each member printer driver serving as a target of the group printer driver, if there are functions in all of the target member printer drivers, by the group printer driver UI, the functions are handled as items which can be set, and if there is at least one member printer driver without a function, such an item is handled as an item which cannot be set.

The conflicting process for forming the group printer driver UI in step S1301 will be described with reference to a specific example.

A printer driver A in Fig. 12 shows the group printer driver and printer drivers B, C, and D indicate the member printer drivers constructing the group printer driver. In the table, "present" and "absent" indicate whether each member printer driver supports the book-binding printing function, stapling printing function, or punching function or not.

First, when attention is paid to the book-binding printing function, although the drivers B and D have the book-binding printing function, since the driver C does not have such a function, the item of "book-binding printing function" of the group printer driver A is "absent".

Similarly, as for the stapling function, since the function exists in all of the member printer drivers B, C, and D, the item of "stapling function" of the group printer driver A is "present". As for the punching function, since the function does not exist in all of the member printer drivers B, C, and D, the item of "punching function" of the group printer driver A is "absent".

Control is made in a manner such that the conflicting process is executed by the control program as mentioned above and a result is set as set items of the group printer driver UI.

In step S1302, a process similar to the conflicting process described in step S1301 is executed with respect to the expansion set items of each member printer driver.

In step S1303, items which are displayed on the group printer driver UI are extracted on the basis of the results of the conflicting processes executed in steps S1301 and 1302, and a UI display based on the extracted items is performed. In accordance with the displayed items, the user can easily perform the setting which does not cause a contradiction among the member printer drivers.

With respect to the function which all of the member printer drivers do not have as a result of the conflict described above, control is made so that it cannot be set by the group printer driver UI. As such control, for example, display control such that the items are gray-out displayed or not displayed, or the like is presumed. On the other hand, with respect to the set items corresponding to the functions provided for the member printer drivers in common as a result of the conflict, the display control such as gray-out display, non-display, or the like described above is not performed.

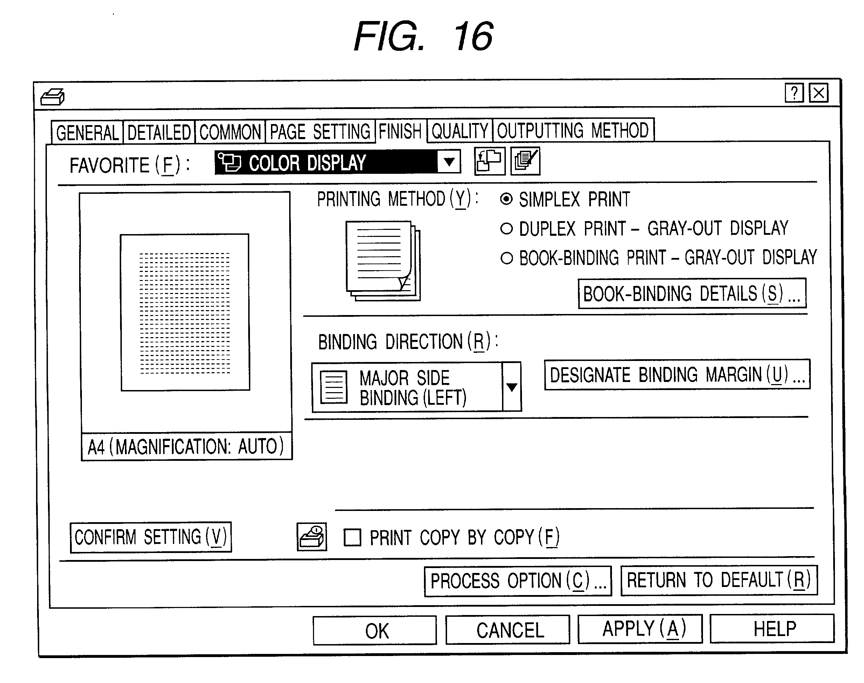

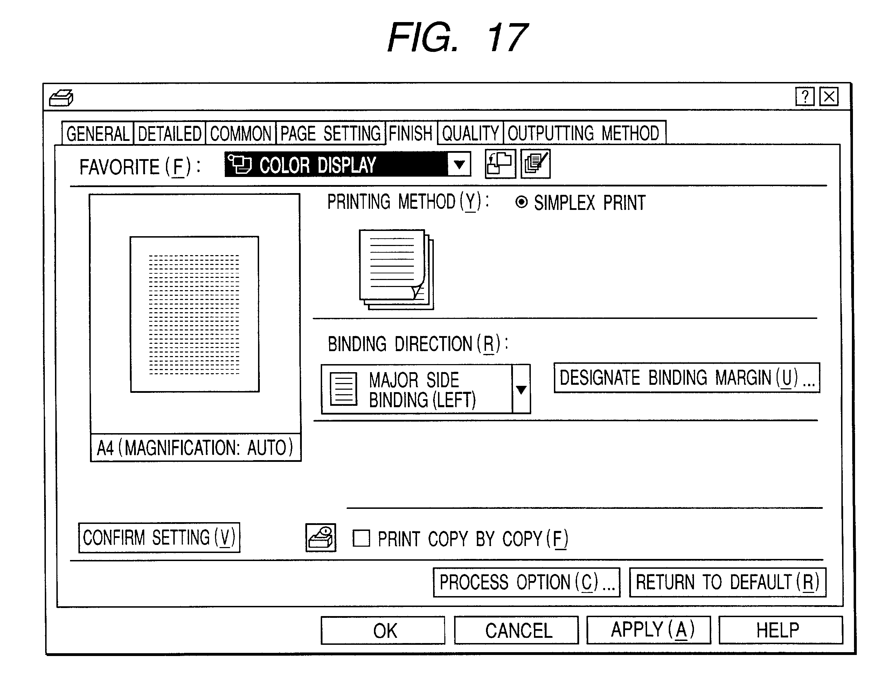

Figs. 16 and 17 show display states of the UI subjected to the control of the gray-out display of the UI and the UI subjected to the non-display control, respectively. The displays of Figs. 16 and 17 correspond to the cases where the contents based on the picture plane information to display the user interface included in the print control program (including the group printer driver) of the invention are displayed on the display unit via the OS, respectively. The display contents in the embodiment are also displayed by a similar mechanism. A display mechanism described in each flowchart is actually realized by a mechanism similar to that mentioned above.

In the display states of Figs. 16 and 17, dialog boxes of a duplex print and a book-binding print among the set items have been subjected to the control of the gray-out display and the non-display control described above, respectively.

Since the process in each step described in Fig. 9 is realized as mentioned above, the UI control of the group printer driver has previously been made so that a combination which is impossible on the functions, such as a combination of the designation of, for example, the punching function and the stapling function at the time when the "book-binding print" is designated by the user cannot be set. The set picture plane having high operability such that no contradiction occurs in the set items in accordance with a setting instruction of the user or the like can be provided to the user.

In step S1304, since the items in which there is no set item on the group printer driver UI are set by the mechanism described in step S1301 or S1302, a process for discriminating whether an instruction to open the UI of one of the member printer drivers constructing the group printer driver and set items in detail has been issued or not is executed.

This process corresponds to a discrimination about the presence or absence of an input signal in response to the designation of the set target member printer on the group printer driver UI by the user. If it is determined that the instruction to open the UI of one of the member printer drivers has been issued, the processing routine advances to step S1305.

In step S1305, the UI of the member printer driver designated in step S1304 is displayed and the detailed setting is performed.

In the case where the member printer driver UI is displayed, the items which can be set by the group printer driver can be also set and when the same function is set to both of them, the setting process is executed twice (for example, if the 2-up print mode is set by the UI of the group printer driver and the 2-up print mode is further set also by the UI of the member printer driver, a printing process of the 4-up print mode is executed). In the control according to the invention, therefore, the following control is made.
(1) If the member printer driver is the "function controllable driver", with respect to the item which conflicts with the set items on the group printer driver UI, the UI control is made in a manner such that such an item cannot be set on the member printer driver UI by a method whereby such an item is gray-out displayed or not displayed.
(2) If the member printer driver is the "function uncontrollable driver", with respect to the common set items, the UI is displayed in the setting state set via the group printer driver. After the UI is displayed, if those items are changed on the member printer driver UI, control is made in a manner such that in a step of closing the driver UI, the information of the set items set by the group printer driver is overwritten onto the common set items of the corresponding member printer driver, and the change in setting on the member printer driver UI is not permitted. A case where the items serving as targets of the setting invalidation are gray-displayed or not displayed so as to invalidate the setting in order to prevent the setting change from being preliminarily performed is also presumed.

Display control such that when the overwriting process is executed, a warning showing that the setting change on the member printer driver UI is invalid is displayed is also presumed in the invention.

In the flowchart shown in Fig. 13, since all of the target member printers are the "function controllable drivers", the control described in (1) is made.

As mentioned above, according to the flowchart of Fig. 13, when the member printer driver UI is called from the group printer driver UI, hitherto, the user interfaces of the respective printer drivers have been merely displayed. According to the invention, with respect to the items which can be set by the group printer driver, control is made so that the double setting is not performed in the member printer, or the control of the gray display/non-display is preliminarily made so that the double setting is not performed. Therefore, the user interface for setting so as to provide high use efficiency for the user can be provided.

Since the user interface of the group printer driver in step S1304 is provided, even in the printing process for a plurality of member printer drivers having different set items (functions) as targets, the user can obtain the user interface which makes the most of the set items of each member printer driver.

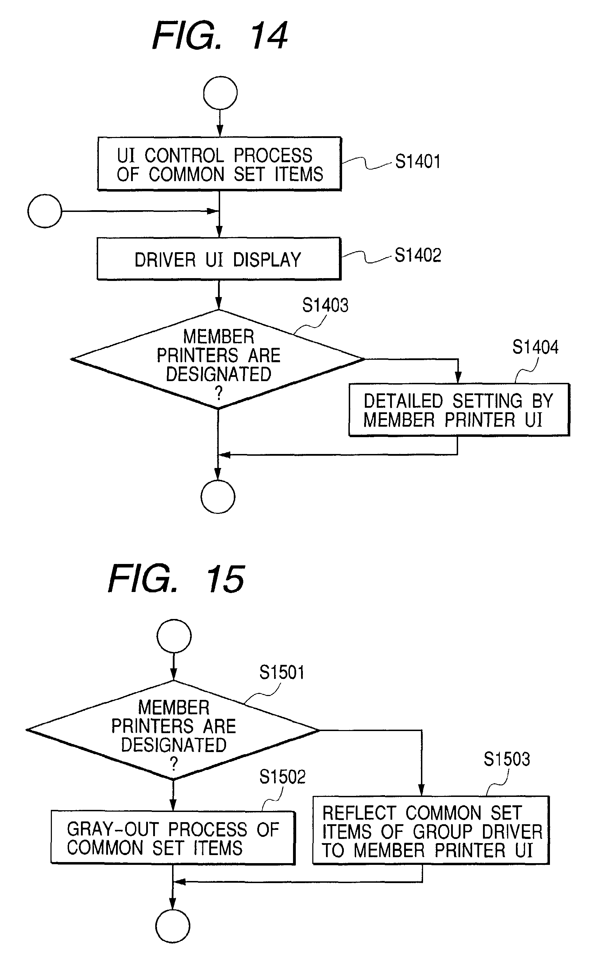

Subsequently, Fig. 14 will be explained. Fig. 14 is a flowchart showing details of step S906. It is assumed that a process of each step in this flowchart of Fig. 14 is realized by a method whereby the CPU (central processing unit) provided for the information processing apparatus described above reads out the control program stored in a predetermined memory medium such as ROM, FD, or the like, a hard disk (HD), or the like and executes a process based on the read-out program.

Fig. 14 shows the processes which are presumed in the case where, unlike the case as described in step S905, the member printer drivers are constructed by a mixture of the "function controllable drivers" and the "function uncontrollable drivers" or only by the "function uncontrollable drivers". Therefore, control is made so that the items which can be set by the group printer driver UI are limited to the common set items described in Fig. 11.

In step S1401, in a manner similar to step S1301, ability regarding each common set item of each member printer driver is inquired, the conflicting process described above with regard to each function of each item is executed, and the items which are displayed by the group printer driver UI are extracted on the basis of the result of the conflicting process and the set items which are displayed on the UI are determined.

In step S1402, the group printer driver UI based on the extracted set items on the basis of the result of the conflicting process performed in step S1401 is displayed.

With respect to the items having no function or the items determined to be the expansion set items as a result of the conflicting process, control is made so that they cannot be set on the UI of the group printer driver by a method whereby they are gray-out displayed or not displayed.

In step S1403, whether the member printer driver has been designated via the pointing device such as a mouse or the like or not is discriminated. If it is determined that it has been designated, the processing routine advances to step S1404. The designation of the member printer driver corresponds to the process for opening the UI of the member printer driver and performing the detailed setting in order to set the expansion set items which are not displayed in step S1402 or the unique set items which each member printer has.

In step S1404, the UI of the member printer driver designated in step S1403 is displayed and the detailed setting is performed in accordance with a setting instruction for the set items which was inputted via the displayed UI.

Fig. 15 is a flowchart showing the detailed process of step S1404.

In step S1501, the kind of member printer driver is discriminated. If it is determined that the target driver is the "function controllable driver", the processing routine advances to step S1502. Unless otherwise, the processing routine advances to step S1503.

In step S1502, the control of the common set item UI of the member printer driver is made in accordance with the rule described in (1) in step S1305. A UI display in which the gray-out control or the like of the UI has been made to the common set items is executed and the detailed setting is executed.

In step S1503, the control of the common set item UI of the member printer driver is made in accordance with the rule shown in (2) in step S1305. The UI display subjected to this step is performed and the detailed setting is executed.

As mentioned above, according to the flowcharts of Figs. 14 and 15, if the member printer driver UI is called from the group printer driver UI, hitherto, the user interface of each printer driver has merely been displayed. According to the invention, on the other hand, with respect to the items which can be set by the group printer driver, control is made so that the double setting is not performed in the member printer, or the control of the gray display/non-display is preliminarily made so that the double setting is not performed. Therefore, the user interface for print setting of very high use efficiency by which the user can perform the setting in the group printer driver and the setting of each member printer driver without any contradiction can be provided.

Since the user interface of the group printer driver in step S1402 is provided, even in a printing process for a plurality of member printer drivers of different set items (functions) as targets, the user can obtain the user interface which makes the most of the set items of each member printer driver.

On the other hand, if all of the setting operations are finished on the group printer driver UI, by pressing an "end of setting" button, the processing routine advances to a process for finishing the setting in step 907.

In step S908, whether the items set via the UI of the group printer driver are not contradictory as set items of each member printer driver or not is discriminated.

The printer has an item which is intimately concerned with the function which the device has. For example, in case of the printer A, the position on the paper of the A4 size where the stapling operation is possible is limited only to the upper left position of the paper and in case of the printer B, the position on the paper of the A4 size where the stapling operation is possible is limited only to the lower left position of the paper.

In this step, in addition to the conflict check regarding the combination which is impossible on the setting functions, whether the items set on the group printer driver UI can be reflected as set items of each member printer driver or not is discriminated to each member printer driver as a target.

In step S909, a result of the conflict check executed in the above step is discriminated. If the set items set on the group printer driver UI are proper in all of the member printers, the processing routine advances to step S912. The display of the group printer driver UI is finished. If it is determined in step S909 that the item which will cause a conflict exists among the set items, step S910 follows and a "reset" button and a "forced" button are displayed together with a message "set items are reset on the group printer driver UI?" or "printing process is executed in the present set items?". In step S911, whether the "reset" button or the "forced" button has been pressed is discriminated. If it is determined that the "reset" button is pressed, the processing routine is returned to a just-previous process of step S1303 (in the case of the construction comprising the member printer drivers corresponding to step S905) or step S1402 (in the case of the construction comprising the member printer drivers corresponding to step S906) in accordance with the construction of the member printers. If it is determined that the "forced" button has been pressed, the processing routine advances to a process in step S912 and the series of processes regarding the display of the group printer driver UI is finished. The processing routine advances to the process for again repeating the series of processes.

A relation between the recording of the information set by the foregoing UI in the embodiment and the general print files in Fig. 8 mentioned above will now be described.

In the embodiment, with respect to the information set by the foregoing UI, the driver set information (DEVMODE) of the group printer driver is recorded into the foregoing print instructing portion in the general print file described in Fig. 8 in each of the common area and the expansion area. Driver set information (DEVMODE) of each member printer driver is recorded into the driver information setting portion of the member printer driver in the general print file in each of the common area and the expansion area.

After that, the general print file is used in the printing process using the foregoing print job control system and the print in the embodiment can be executed.

As mentioned above, according to the invention, in the print job control system using the group printer driver, the printers which can be connected as member printers can select the format of the PDL without limiting it. The set items on the group printer driver UI are reflected as set items of each member printer driver. Therefore, an effect of fairly reducing an opportunity of setting by opening the member printer driver UI can be obtained.

Since control is made so that the expansion set items can be set on the group printer driver UI in dependence on the construction of the member printer drivers, an effect such that efficiency of the batch print setting can be remarkably raised can be obtained.

When the member printer driver UI is opened and the detailed setting for the member printer drivers is executed, the UI control is made to the member printer drivers whose UI control is possible. With respect to the drivers whose UI control is impossible, by synchronizing with the setting in the group printer driver upon completion of the setting in the member printer driver UI, the contradiction of the set items is prevented. Thus, the printing means in which the operability of the user is largely improved can be provided.

### (Second example)

A further modification of the first embodiment will now be described. The contents described in conjunction with Figs. 1 to 8, 11, 12, 16, and 17 can be also applied to the second example. Points different from the first embodiment will be mainly explained hereinbelow.

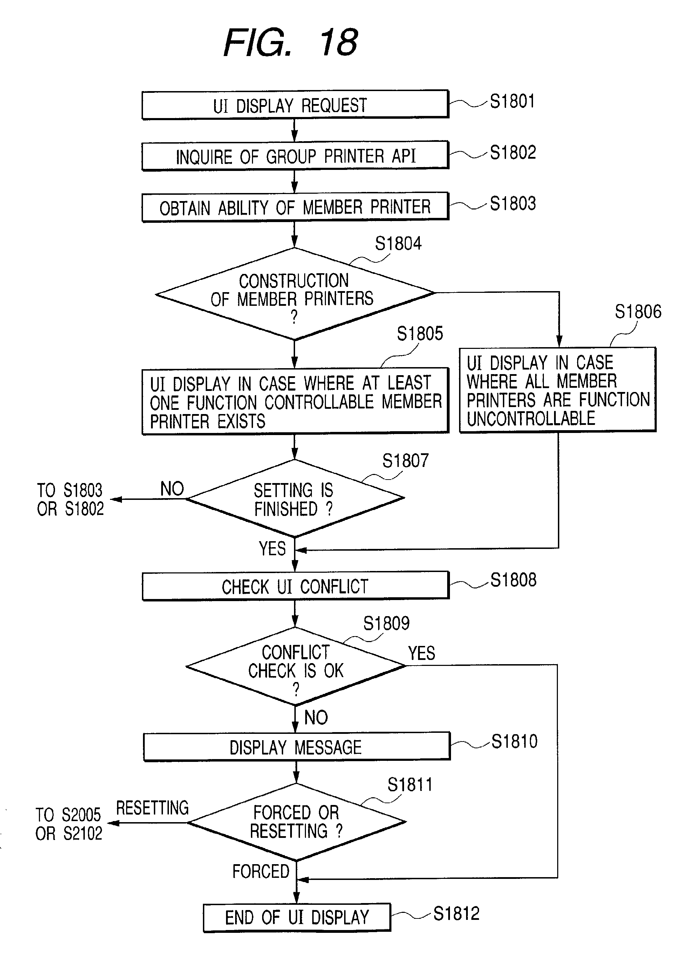

First, a flowchart of Fig. 18 will be described. It is assumed that a process of each step in the flowchart of Fig. 18 is realized by a method whereby the CPU (central processing unit) provided for the information processing apparatus described above reads out the control program stored in a predetermined memory medium such as ROM, FD, hard disk (HD), or the like and executes a process based on the read-out program.

Since steps S1801 to S1803 are similar to steps S901 to S903 in Fig. 9, their detailed explanation is omitted.

In step S1804, by which kinds of member printer drivers the member printers are constructed is discriminated from the information about whether the function is controllable or uncontrollable which was read out in step S1803.

"Function controllable/function uncontrollable" used in the description in step S1803 also including the first embodiment will be described in detail. In "Function controllable", for example, the printer driver such that the print setting (for example, book-binding margin (refer to Fig. 11)) as an expansion set item can be instructed from the job control print service 622 (software module) in Fig. 7 or predetermined set items can be gray-out display controlled as shown in Fig. 16 is called a "function controllable" member printer. On the contrary, the printer driver such that such an instruction or gray-out display control cannot be performed is called a "function uncontrollable" member printer.

Specifically speaking, to set the expansion set items of the printer driver or make display control such as a gray-out display or the like, it is necessary to know the SDK (Software Development Kit) developed for control of the printer driver. If the SDK of the printer driver to be controlled cannot be assembled into the system, or the like, the function is uncontrollable. For example, a printer driver or the like designed by another vendor corresponds to such a "function uncontrollable" member printer.

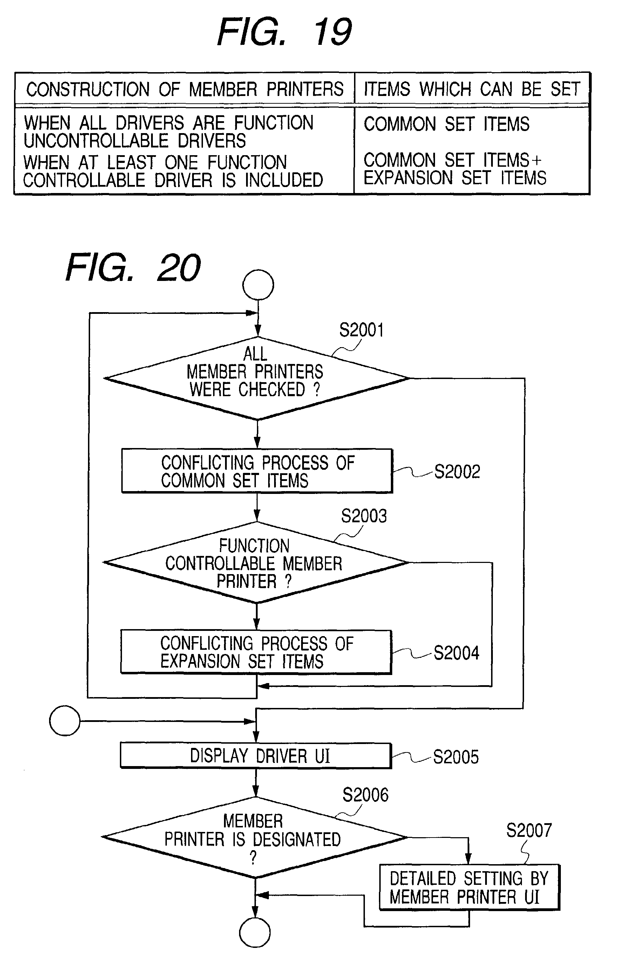

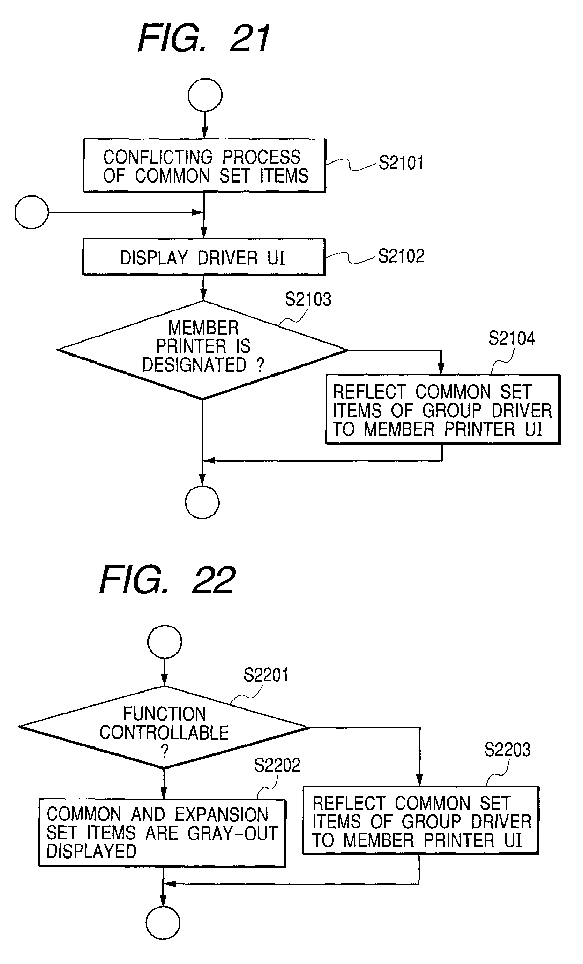

Returning to the explanation of Fig. 18, if it is determined by the discrimination result that at least one "function controllable" driver is included among the member printers, the processing routine advances to step S1805 (details are shown in Fig. 20). Unless otherwise, that is, if the member printer drivers are constructed only by the "function uncontrollable drivers", the processing routine advances to step S1806 (details are shown in Fig. 21). since processes in steps S1807 to S1812 are similar to those in steps S907 to S912 in Fig. 9, their detailed explanation is omitted here.

Fig. 19 shows a combination (correspondence) of a construction of member printers and the items which can be set in the second embodiment. Since common set items and expansion set items in Fig. 19 are similar to those in the foregoing first embodiment, they will not particularly explained here.

Fig. 20 will now be described. Fig. 20 is a flowchart showing a detailed process of step S1805. It is assumed that a process of each step in the flowchart of Fig. 20 is realized by a method whereby the CPU (central processing unit) provided for the information processing apparatus described above reads out a control program stored in a predetermined memory medium (nonvolatile memory means) such as ROM, FD, hard disk (HD), or the like and executes processes based on the read-out program.

First, in step S2001, whether a conflict check of the function has been made with respect to all of the member printers or not is discriminated. If the check for all of the member printers has been finished, step S2005 follows. If NO, step S2002 follows.

In step S2002, a conflict check is made with respect to the common set items (an example of items is shown in Fig. 11). Control is made in a manner such that ability regarding each common set item of each member printer driver is inquired, a conflicting process of the function is executed, and the items to be displayed by the group printer driver UI are selected on the basis of a result of the conflicting process. In this step, the conflict check is made to all printer drivers as targets.

In step S2003, the member printers are discriminated. If the member printers are "function controllable", step S2004 follows. If the member printers are "function uncontrollable", the processing routine is returned to step S2001. In step S2004, a conflicting process of the expansion set items (an example of items is shown in Fig. 11) is executed to the "function controllable printers". After completion of this step, the processing routine is returned to step S2001.

In step S2005, the items which are displayed on the group printer driver UI are extracted on the basis of results of the conflicting process performed in steps S2002 and S2004 and the UI based on the extracted items is displayed. In accordance with the displayed items, the user can easily perform the setting so that no contradiction is caused among the member printer drivers.

With respect to the functions which all of the member printer drivers do not have as a result of the conflict described above, control is made so that the setting cannot be performed by the group printer driver UI.

As such control, for example, the display control for allowing the items to be gray-out displayed, the display control in which they are not displayed, or the like is presumed as also described in Figs. 16 and 17. The set items corresponding to the functions provided for each member printer driver in common as a result of the conflict are processed so that the control such as gray-out display, non-display, or the like described above is not made.

In step S2006, a process for discriminating whether an instruction such that in order to set the items which do not become the conflict targets in step S2002 or S2004, the UI of one of the member printer drivers constructing the group printer driver is opened and the detailed setting is performed has been issued or not is executed.

If it is determined that one of the member printer drivers (member printers) constructing the group printer driver (group printer) has been designated, the processing routine advances to step S2007. Details of a process of step S2007 will be described with reference to Fig. 22.

Fig. 22 is a flowchart showing further details of step S2007.

In step S2201, whether the member printer driver designated via the mouse or the like is "function controllable" or not is discriminated. The discrimination about "function controllable" or "function uncontrollable" is as described above in step S1803.

If it is determined that the member printer driver is "function controllable", display control of the items including the common set items and the expansion set items is made in step S2202. That is, in step S2202, since a process similar to (1) in step S1305 described in the first embodiment is executed, its detailed explanation is omitted.

If it is determined in step S2201 that the designated member printer driver is "function uncontrollable", a process similar to step S1305 in the first embodiment is executed.

Subsequently, Fig. 21 will be explained. Fig. 21 shows details of step S1806 in Fig. 18.

First, since processes in steps S2101 to S2103 are similar to those in steps S1401 to S1403 in Fig. 14 in the first embodiment, their detailed explanation is omitted.

In step S2104, since the target member printer drivers are "function uncontrollable", a setting state regarding the common set items set via the user interface of the group printer driver is reflected to the user interface of the member printer driver. In this reflection, the display control as described in Figs. 16 and 17 is not made but the setting state set via the group printer driver UI is reflected to the member printer driver UI.

The reasons why the setting regarding the expansion set items cannot be reflected or the process for preventing that the overlapped print setting is performed via the member printer driver UI with respect to the items which have already been set by the group printer driver UI cannot be executed are similar to those already described in step S1803.

According to the first embodiment, in steps S905 and S906, the subsequent processes are branched in accordance with the case where all of the member printers constructing the group printer are "function controllable" or the case where at least one of the "function uncontrollable" drivers is included. According to the second example, the subsequent processes can be branched in accordance with whether at least one of the "function controllable" member printers is included in the member printers constructing the group printer (S1805) or all of the member printers are the "function uncontrollable" member printers. Therefore, since more items can be set by the group printer for the set items of the "function controllable" printers than those in the first embodiment, an effect of reducing the setting work of the user can be obtained.

As described above, according to the invention, in the virtual printer driver in which the print instructions are issued to a plurality of printer drivers in the lump, even if the providing sources of the printer drivers are different or their characteristics are different, the virtual printer driver (group printer driver) which makes the most of the function of each printer driver can be provided.

Even in case of performing the detailed individual setting to each member printer driver by the group printer driver which is provided by the invention, the setting mechanism of the member printer drivers which makes the most of the setting in the efficient group printer driver UI can be provided. In the group printer driver, even if the setting including the expansion set items matched with the "function controllable" member printer drivers is performed, the control is made so that the setting of the expansion set items is invalidated for the "function uncontrollable" member printer drivers. Therefore, the print control mechanism in which no inconvenience occurs can be provided.

## Claims

1. A print control method of a printing system including a group printer driver which can control a plurality of member printer drivers, the plurality of member printer drivers having a common set item corresponding to a printer function which can be inquired by a print control program, on which the group printer driver operates, via an operating system irrespective of a difference of a plurality of member printer drivers and each member printer driver having an expansion set item corresponding to a printer function that cannot always be inquired by the group printer driver via the operating system, the method **characterized by** comprising:
an obtaining step (S903) of obtaining ability information of each of the member printer drivers;
a discrimination step (S904) of discriminating from the ability information obtained for each member printer driver of the plurality of member printer drivers, if the expansion set item in a setting screen of the member printer driver where one or more settings of the expansion set item can be set, is controllable by the group printer driver;
an extracting step (S905, S906) of, if the discrimination step discriminates all of the member printer drivers as having the expansion set item which can be controlled by the group printer driver, extracting from the member printer drivers a commonly held common set item and an expansion set item, and if the discrimination step does not discriminate all of the member printer drivers as having the expansion set item which is controllable by the group printer driver, extracting from the member printer drivers a commonly held common set item;
a control step (S905, S906) of controlling the group printer driver so that the expansion set item or common set item extracted in said extracting step can be set on a setting screen of the group printer driver;
an inhibiting step (S905, S906) of controlling a member printer driver so that, on the setting screen of the member printer driver in which display of the expansion set item can be controlled by the group printer driver, the setting of the one or more settings of the expansion set item set on the setting screen of the group printer driver cannot be changed on the setting screen of the member printer driver;
an invalidating step (S906, S909, S910) of controlling a member printer driver so that, if a setting of a common set item set on a setting screen of the group printer driver where one or more settings of the common set item can be set, is changed on the setting screen of the member printer driver in which display of the expansion set item cannot be controlled by the group printer driver, the changed setting is made invalid; and
a print control step of controlling the plurality of member printer drivers to execute printing based on a print setting designated via the setting screen of the group printer driver, wherein print data generated in said print control step are sent to printing apparatuses corresponding to the respective member printer drivers.

2. A method according to claim 1, wherein said extracting step comprises determining whether an expansion set item is to be included in the setting screen of said group printer driver or not in accordance with a combination of kinds of said plurality of member printer drivers.

3. A method according to any preceding claim, wherein said method further comprises an obtaining step of obtaining, from each of said plurality of member printer drivers, information indicating whether the expansion set item of the member printer driver is controllable by the group printer driver, wherein said extracting step executes an extracting process based on the information obtained in said obtaining step.

4. A method according to any preceding claim, wherein said method further comprises a conflicting step of including the common set item as a common set item of which one or more settings can be set on the setting screen of said group printer driver.

5. A method according to any one of claims 1 to 4, wherein said method further comprises a display control step of controlling so as to display a member printer driver setting screen for setting the items of the member printer driver designated from one of said plurality of member printer drivers, wherein the items displayed on the member printer driver setting screen include an expansion set item or common set item not extracted in said extracting step in a form such that they can be set.

6. A method according to any one of claims 1 to 5, further comprising a conflicting step of including the common set item as a common set item of which one or more settings can be set on the setting screen of said group printer driver independently for the common set item and for the expansion set item.

7. A print control apparatus for controlling a plurality of member printer drivers and a group printer driver which can control said plurality of member printer drivers, the plurality of member printer drivers having a common set item corresponding to a printer function which can be inquired by a print control program, on which the group printer driver operates, via an operating system irrespective of a difference of a plurality of member printer drivers and each member printer driver having an expansion set item corresponding to a printer function that cannot always be inquired by the group printer driver via the operating system, the print control apparatus **characterized by** comprising:
obtaining means for obtaining ability information for each of the member printer drivers;
discriminating means for discriminating from the ability information obtained for each member printer driver of the plurality of member printer drivers if display of the expansion set item in a setting screen of the member printer driver where one or more settings of the expansion set item can be set, is controllable by the group printer driver;
extracting means for, if the discrimination step discriminates all of the member printer drivers as having the expansion set item which can be controlled by the group printer driver, extracting from the member printer drivers a commonly held common set item and an expansion set item and if the discrimination step does not discriminate all of the member printer drivers as having the expansion set item the display of which can be controlled by the group printer driver, extracting from the member printer drivers a commonly held common set item;
control means for controlling the group printer driver so that the common set item or expansion set item extracted by said extracting means can be set on a setting screen of said group printer driver;
inhibiting means for controlling a member printer driver so that, on the setting screen of the member printer driver in which the expansion set item can be controlled by the group printer driver, the setting of one or more settings of the expansion set item set on the setting screen of the group printer driver cannot be changed;
invalidating means for controlling a member printer driver so that, if a setting of a common set item set on the setting screen of the group printer driver where one or more settings of the common set item can be set, is changed on the setting screen of the member printer driver in which displaying of the expansion set item cannot be controlled by the group printer driver, the changed setting is made invalid; and
print control means for controlling the plurality of member printer drivers to execute printing based on a print setting designated via the setting screen of the group printer driver, wherein print data generated by said print control means are sent to printing apparatuses corresponding to the respective member printer drivers.

8. An apparatus according to claim 7, wherein said extracting means is configured to determine whether an expansion set item is to be included in the setting screen of said group printer driver or not in accordance with a combination of kinds of said plurality of member printer drivers.

9. An apparatus according to claim 8, further comprising obtaining means for obtaining, from each of said plurality of member printer drivers, information indicating whether the expansion set item of the member printer driver is controllable by the group printer driver, wherein said extracting means is configured to execute an extracting process based on the information obtained by the obtaining means.

10. An apparatus according to any one of claims 7 to 9, further comprising conflicting means for including the common set item as a common set item of which one or more settings can be set on the setting screen of said group printer driver.

11. An apparatus according to any one of claims 7 to 10, further comprising display control means for controlling so as to display a member printer driver setting screen for setting the expansion set item or common set item of the member printer driver designated from one of said plurality of member printer drivers, wherein the expansion set or common set items displayed on the member printer driver setting screen include the expansion set or common set items not extracted by said extracting means in a form such that one or more of their settings can be set.

12. An apparatus according to any one of claims 7 to 11, further comprising conflicting means for including the common set item as a common set item which can be set on the setting screen of said group printer driver independently for the common set item and for the expansion set item.

13. A print control program which, when executed by an information processing apparatus, causes the apparatus to perform the method of any one of claims 1 to 6.

14. A computer-readable memory medium which stores a print control program according to claim 13.

## Patentansprüche

1. Drucksteuerungsverfahren eines Drucksystems einschließlich eines Gruppendruckertreibers, der mehrere Mitgliedsdruckertreiber steuern kann, wobei die mehreren Mitgliedsdruckertreiber ein gemeinsames Einstellungselement entsprechend einer Druckerfunktion aufweisen, die von einem Druckersteuerungsprogramm, auf dem der Gruppendruckertreiber arbeitet, über ein Betriebssystem ungeachtet eines Unterschieds von mehreren Mitgliedsdruckertreibern angefragt werden kann, und wobei jeder Mitgliedsdruckertreiber ein Erweiterungseinstellungselement entsprechend einer Druckerfunktion aufweist, die nicht immer durch den Gruppendruckertreiber über das Betriebssystem angefragt werden kann, wobei das Verfahren **gekennzeichnet ist durch**:
einen Bezugsschritt (S903) des Beziehens von Fähigkeitsinformation über jeden Mitgliedsdruckertreiber;
einen Unterscheidungsschritt (S904) des Unterscheidens anhand der für jeden der mehreren Mitgliedsdruckertreiber bezogenen Fähigkeitsinformation, ob das Erweiterungseinstellungselement in einer Einstellungsmaske des Mitgliedsdruckertreibers, in der eine oder mehrere Einstellungen des Erweiterungseinstellungselements eingestellt werden können, vom Gruppendruckertreiber gesteuert werden kann;
einen Extraktionsschritt (S905, S906) des Extrahierens, falls der Unterscheidungsschritt bestimmt, dass alle Mitgliedsdruckertreiber das vom Gruppendruckertreiber steuerbare Erweiterungseinstellungselement aufweisen, eines gemeinsam gehaltenen gemeinsamen Einstellungselements und eines Erweiterungseinstellungselements aus den Mitgliedsdruckertreibern, und des Extrahierens, falls der Unterscheidungsschritt nicht bestimmt, dass alle Mitgliedsdruckertreiber das vom Gruppendruckertreiber steuerbare Erweiterungseinstellungselement aufweisen, eines gemeinsam gehaltenen gemeinsamen Einstellungselements aus den Mitgliedsdruckertreibern;
einen Steuerungsschritt (S905, S906) des Steuerns des Gruppendruckertreibers derart, dass das im Extraktionsschritt extrahierte Erweiterungseinstellungselement oder gemeinsame Einstellungselement in einer Einstellungsmaske des Gruppendruckertreibers eingestellt werden kann;
einen Verhinderungsschritt (S905, S906) des Steuerns eines Mitgliedsdruckertreibers derart, dass in der Einstellungsmaske des Mitgliedsdruckertreibers, in der eine Anzeige des Erweiterungseinstellungselements vom Gruppendruckertreiber gesteuert werden kann, die Einstellung der einen oder mehreren in der Einstellungsmaske des Gruppendruckertreibers eingestellten Einstellungen des Erweiterungseinstellungselements nicht geändert werden kann;
einen Ungültigsetzungsschritt (S906, S909, S910) des Steuerns eines Mitgliedsdruckertreibers derart, dass, falls eine Einstellung eines gemeinsamen Einstellungselements, eingestellt in einer Einstellungsmaske des Gruppendruckertreibers, in der eine oder mehrere Einstellungen des gemeinsamen Einstellungselements eingestellt werden können, in der Einstellungsmaske des Mitgliedsdruckertreibers geändert wird, in der eine Anzeige des Erweiterungseinstellungselements nicht vom Gruppendruckertreiber gesteuert werden kann, die geänderte Einstellung ungültig gesetzt wird; und
einen Drucksteuerungsschritt des Steuerns der mehreren Mitgliedsdruckertreiber, um Drucken auszuführen, basierend auf einer über die Einstellungsmaske des Gruppendruckertreibers ausgewiesene Druckereinstellung, wobei im Druckersteuerungsschritt erzeugte Druckdaten an den jeweiligen Mitgliedsdruckertreibern entsprechende Druckvorrichtungen gesendet werden.

2. Verfahren nach Anspruch 1, wobei der Extraktionsschritt das Bestimmen umfasst, ob ein Erweiterungseinstellungselement in der Einstellungsmaske des Gruppendruckertreibers eingeschlossen werden soll oder nicht, gemäß einer Kombination von Arten der mehreren Mitgliedsdruckertreiber.

3. Verfahren nach einem der vorangegangenen Ansprüche, wobei das Verfahren weiterhin umfasst einen Bezugsschritt des Beziehens von Information von jedem Mitgliedsdruckertreiber darüber, ob das Erweiterungseinstellungselement des Mitgliedsdruckertreibers vom Gruppendruckertreiber gesteuert werden kann, wobei der Extraktionsschritt einen Extraktionsvorgang basierend auf der im Bezugsschritt bezogenen Information ausführt.

4. Verfahren nach einem der vorangegangenen Ansprüche, wobei das Verfahren weiterhin umfasst einen Konfliktverarbeitungsschritt des Einschließens des gemeinsamen Einstellungselements als ein gemeinsames Einstellungselement, von dem eine oder mehrere Einstellungen in der Einstellungsmaske des Gruppendruckertreibers eingestellt werden können.

5. Verfahren nach einem der Ansprüche 1 bis 4, wobei das Verfahren weiterhin umfasst einen Anzeigesteuerungsschritt des Steuerns, um so eine Mitgliedsdruckertreibereinstellungsmaske zum Einstellen der Elemente des Mitgliedsdruckertreibers, ausgewiesen von einem der mehreren Mitgliedsdruckertreiber, anzuzeigen, wobei die Elemente, die in der Mitgliedsdruckertreibereinstellungsmaske angezeigt werden, ein nicht im Extraktionsschritt extrahiertes Erweiterungseinstellungselement oder gemeinsames Einstellungselement in einer solchen Form einschließen, dass sie eingestellt werden können.

6. Verfahren nach einem der Ansprüche 1 bis 5, weiterhin umfassend einen Konfliktverarbeitungsschritt des Einschließens des gemeinsamen Einstellungselements als ein gemeinsames Einstellungselement, von dem eine oder mehrere Einstellungen in der Einstellungsmaske des Gruppendruckertreibers unabhängig für das gemeinsame Einstellungselement und für das Erweiterungseinstellungselement eingestellt werden können.

7. Drucksteuerungsvorrichtung zum Steuern mehrerer Mitgliedsdruckertreiber und eines Gruppendruckertreibers, der die mehreren Mitgliedsdruckertreiber steuern kann, wobei die mehreren Mitgliedsdruckertreiber ein gemeinsames Einstellungselement entsprechend einer Druckerfunktion aufweisen, die von einem Druckersteuerungsprogramm, auf dem der Gruppendruckertreiber arbeitet, über ein Betriebssystem ungeachtet eines Unterschieds der mehreren Mitgliedsdruckertreiber angefragt werden kann, und wobei jeder Mitgliedsdruckertreiber ein Erweiterungseinstellungselement entsprechend einer Druckerfunktion aufweist, die nicht immer von einem Gruppendruckertreiber über das Betriebssystem angefragt werden kann, wobei die Druckersteuerungsvorrichtung **gekennzeichnet ist durch**:
eine Bezugseinrichtung zum Beziehen von Fähigkeitsinformation von jedem der Mitgliedsdruckertreiber;
eine Unterscheidungseinrichtung zum Unterscheiden anhand der für jeden Mitgliedsdruckertreiber der mehreren Mitgliedsdruckertreiber bezogenen Fähigkeitsinformation, ob eine Anzeige des Erweiterungseinstellungselements in einer Einstellungsmaske des Mitgliedsdruckertreibers, in der eine oder mehrere Einstellungen des Erweiterungseinstellungselements eingestellt werden können, vom Gruppendruckertreiber gesteuert werden kann;
eine Extraktionseinrichtung zum Extrahieren, falls die Unterscheidungseinrichtung bestimmt, dass alle Mitgliedsdruckertreiber das vom Gruppendruckertreiber steuerbare Erweiterungseinstellungselement aufweisen, eines gemeinsam gehaltenen gemeinsamen Einstellungselements und eines Erweiterungseinstellungselements aus den Mitgliedsdruckertreibern, und zum Extrahieren, falls die Unterscheidungseinrichtung nicht bestimmt, dass alle Mitgliedsdruckertreiber das Erweiterungseinstellungselement, dessen Anzeige vom Gruppendruckertreiber gesteuert werden kann, aufweisen, eines gemeinsam gehaltenen gemeinsamen Einstellungselements aus den Mitgliedsdruckertreibern;
eine Steuerungseinrichtung zum Steuern des Gruppendruckertreibers derart, dass das von der Extraktionseinrichtung extrahierte gemeinsame Einstellungselement oder Erweiterungseinstellungselement in einer Einstellungsmaske des Gruppendruckertreibers eingestellt werden kann;
eine Verhinderungseinrichtung zum Steuern eines Mitgliedsdruckertreibers derart, dass in der Einstellungsmaske des Mitgliedsdruckertreibers, in der das Erweiterungseinstellungselement vom Gruppendruckertreiber gesteuert werden kann, die Einstellung von einer oder mehreren in der Einstellungsmaske des Gruppendruckertreibers eingestellten Einstellungen des Erweiterungseinstellungselements nicht geändert werden kann;
eine Ungültigsetzungseinrichtung zum Steuern eines Mitgliedsdruckertreibers derart, dass, falls eine Einstellung eines gemeinsamen Einstellungselements, das in der Einstellungsmaske des Gruppendruckertreibers eingestellt worden ist, in der eine oder mehrere Einstellungen des gemeinsamen Einstellungselements eingestellt werden können, in der Einstellungsmaske des Mitgliedsdruckertreibers geändert wird, in der ein Anzeigen des Erweiterungseinstellungselements nicht vom Gruppendruckertreiber gesteuert werden kann, die geänderte Einstellung ungültig gesetzt wird; und
eine Drucksteuerungseinrichtung zum Steuern der mehreren Mitgliedsdruckertreiber, um Drucken auszuführen, basierend auf einer über die Einstellungsmaske des Gruppendruckertreibers ausgewiesene Druckereinstellung, wobei von der Druckersteuerungseinrichtung erzeugte Druckdaten an den jeweiligen Mitgliedsdruckertreibern entsprechende Druckvorrichtungen gesendet werden.

8. Vorrichtung nach Anspruch 7, wobei die Extraktionseinrichtung konfiguriert ist, um zu bestimmen, ob ein Erweiterungseinstellungselement in der Einstellungsmaske des Gruppendruckertreibers eingeschlossen werden soll oder nicht, gemäß einer Kombination von Arten der mehreren Mitgliedsdruckertreiber.

9. Vorrichtung nach Anspruch 8, weiterhin umfassend eine Bezugseinrichtung zum Beziehen von Information von jedem Mitgliedsdruckertreiber darüber, ob das Erweiterungseinstellungselement des Mitgliedsdruckertreibers vom Gruppendruckertreiber gesteuert werden kann, wobei die Extraktionseinrichtung konfiguriert ist, um einen Extraktionsvorgang basierend auf der von der Bezugseinrichtung bezogenen Information auszuführen.

10. Vorrichtung nach einem der Ansprüche 7 bis 9, weiterhin umfassend eine Konfliktverarbeitungseinrichtung zum Einschließen des gemeinsamen Einstellungselements als ein gemeinsames Einstellungselement, von dem eine oder mehrere Einstellungen in der Einstellungsmaske des Gruppendruckertreibers eingestellt werden können.

11. Vorrichtung nach einem der Ansprüche 7 bis 10, weiterhin umfassend eine Anzeigesteuerungseinrichtung zum Steuern, um so eine Mitgliedsdruckertreibereinstellungsmaske zum Einstellen des Erweiterungseinstellungselements oder des gemeinsamen Einstellungselements des Mitgliedsdruckertreibers, ausgewiesen von einem der mehreren Mitgliedsdruckertreiber, anzuzeigen, wobei die in der Mitgliedsdruckertreibereinstellungsmaske angezeigten Erweiterungseinstellungs- oder gemeinsamen Einstellungselemente das nicht von der Extraktionseinrichtung extrahierte Erweiterungseinstellungs- oder gemeinsame Einstellungselement in einer solchen Form einschließen, dass eine oder mehrere ihrer Einstellungen eingestellt werden können.

12. Vorrichtung nach einem der Ansprüche 7 bis 11, weiterhin umfassend eine Konfliktverarbeitungseinrichtung zum Einschließen des gemeinsamen Einstellungselements als ein gemeinsames Einstellungselement, das in der Einstellungsmaske des Gruppendruckertreibers unabhängig für das gemeinsame Einstellungselement und für das Erweiterungseinstellungselement eingestellt werden kann.

13. Drucksteuerungsprogramm, das, wenn es von einer Informationsverarbeitungsvorrichtung ausgeführt wird, die Vorrichtung veranlasst, das Verfahren nach einem der Ansprüche 1 bis 6 durchzuführen.

14. Computerlesbares Speichermedium, das ein Drucksteuerungsprogramm nach Anspruch 13 speichert.

## Revendications

1. Procédé de commande d'impression d'un système d'impression comprenant un pilote d'imprimante groupe qui peut commander une pluralité de pilotes d'imprimantes membres, la pluralité de pilotes d'imprimantes membres comportant un élément défini commun correspondant à une fonction d'imprimante qui peut être interrogée par un programme de commande d'impression, sur lequel opère le pilote d'imprimante groupe, par le biais d'un système d'exploitation, quelle que soit une différence d'une pluralité de pilotes d'imprimantes membres, et chaque pilote d'imprimante membre comportant un élément défini d'extension correspondant à une fonction d'imprimante qui ne peut pas toujours être interrogée par le pilote d'imprimante groupe par le biais du système d'exploitation, le procédé étant **caractérisé en ce qu'**il comprend :
une étape d'obtention (S903) consistant à obtenir des informations de capacité de chacun des pilotes d'imprimantes membres ;
une étape de discrimination (S904) consistant à discriminer, à partir des informations de capacité obtenues pour chaque pilote d'imprimante membre de la pluralité de pilotes d'imprimantes membres, si l'élément défini d'extension, sur un écran de réglage du pilote d'imprimante membre sur lequel un ou plusieurs réglages de l'élément défini d'extension peuvent être définis, peut être commandé par le pilote d'imprimante groupe ;
une étape d'extraction (S905, S906) consistant à, si l'étape de discrimination discrimine que tous les pilotes d'imprimantes membres comportent l'élément défini d'extension qui peut être commandé par le pilote d'imprimante groupe, extraire, des pilotes d'imprimantes membres, un élément défini commun détenu en commun et un élément défini d'extension, et si l'étape de discrimination ne discrimine pas que tous les pilotes d'imprimantes membres comportent l'élément défini d'extension qui peut être commandé par le pilote d'imprimante groupe, extraire, des pilotes d'imprimantes membres, un élément défini commun détenu en commun ;
une étape de commande (S905, S906) consistant à commander le pilote d'imprimante groupe de manière que l'élément défini d'extension ou l'élément défini commun, extraits au cours de ladite étape d'extraction, puisse être défini sur un écran de réglage du pilote d'imprimante groupe ;
une étape d'inhibition (S905, S906) consistant à commander un pilote d'imprimante membre de manière que, sur l'écran de réglage du pilote d'imprimante membre sur lequel l'affichage de l'élément défini d'extension peut être commandé par le pilote d'imprimante groupe, la définition des un ou plusieurs réglages de l'élément défini d'extension sur l'écran de réglage du pilote d'imprimante groupe ne puisse pas être modifiée sur l'écran de réglage du pilote d'imprimante groupe ;
une étape d'invalidation (S906, S909, S910) consistant à commander un pilote d'imprimante membre de manière que, si un réglage d'un élément défini commun sur un écran de réglage du pilote d'imprimante groupe, sur lequel un ou plusieurs réglages de l'élément défini commun peuvent être définis, est modifié sur l'écran de réglage du pilote d'imprimante membre sur lequel l'affichage de l'élément défini d'extension ne peut pas être commandé par le pilote d'imprimante groupe, le réglage modifié devienne invalide ; et
une étape de commande d'impression consistant à commander la pluralité de pilotes d'imprimantes membres pour exécution de l'impression sur la base d'un réglage d'impression indiqué par le biais de l'écran de réglage du pilote d'imprimante groupe, les données d'impression produites au cours de ladite étape de commande d'impression étant envoyées aux appareils d'impression correspondant aux pilotes d'imprimantes membres respectifs.

2. Procédé selon la revendication 1, dans lequel ladite étape d'extraction comprend l'étape consistant à déterminer si un élément défini d'extension est destiné à être inclus dans l'écran de réglage dudit pilote d'imprimante groupe ou pas, en fonction d'une combinaison de types de ladite pluralité de pilotes d'imprimantes membres.

3. Procédé selon l'une quelconque des revendications précédentes, ledit procédé comprenant, en outre, une étape d'obtention consistant à obtenir, à partir de chacun des pilotes de ladite pluralité de pilotes d'imprimantes membres, des informations indiquant si l'élément défini d'extension du pilote d'imprimante membre peut être commandé par le pilote d'imprimante groupe, ladite étape d'extraction exécutant un processus d'extraction sur la base des informations obtenues au cours de ladite étape d'obtention.

4. Procédé selon l'une quelconque des revendications précédentes, ledit procédé comprenant, en outre, une étape de conflit consistant à inclure l'élément défini commun en tant qu'élément défini commun dont un ou plusieurs réglages peuvent être définis sur l'écran de réglage dudit pilote d'imprimante groupe.

5. Procédé selon l'une quelconque des revendications 1 à 4, ledit procédé comprenant, en outre, une étape de commande d'affichage pour une commande afin d'afficher un écran de réglage de pilote d'imprimante membre pour définir les éléments du pilote d'imprimante membre indiqués à partir d'un pilote de ladite pluralité de pilotes d'imprimantes membres, les éléments affichés sur l'écran de réglage de pilote d'imprimante membre comprenant un élément défini d'extension ou un élément défini commun non extrait au cours de ladite étape d'extraction sous une forme telle qu'ils peuvent être définis.

6. Procédé selon l'une quelconque des revendications 1 à 5, comprenant, en outre, une étape de conflit consistant à inclure l'élément défini commun en tant qu'élément défini commun dont peuvent être définis un ou plusieurs réglages sur l'écran de réglage dudit pilote d'imprimante groupe indépendamment pour l'élément défini commun et pour l'élément défini d'extension.

7. Appareil de commande d'impression pour commander une pluralité de pilotes d'imprimantes membres et un pilote d'imprimante groupe qui peut commander ladite pluralité de pilotes d'imprimantes membres, la pluralité de pilotes d'imprimantes membres comportant un élément défini commun correspondant à une fonction d'imprimante qui peut être interrogée par un programme de commande d'impression, sur lequel opère le pilote d'imprimante groupe, par le biais d'un système d'exploitation, quelle que soit une différence d'une pluralité de pilotes d'imprimantes membres, et chaque pilote d'imprimante membre comportant un élément défini d'extension correspondant à une fonction d'imprimante qui ne peut pas toujours être interrogée par le pilote d'imprimante groupe par le biais du système d'exploitation, l'appareil de commande d'impression étant **caractérisé en ce qu'**il comprend :
un moyen d'obtention pour obtenir des informations de capacité pour chacun des pilotes d'imprimantes membres ;
un moyen de discrimination pour discriminer, à partir des informations de capacité obtenues pour chaque pilote d'imprimante membre de la pluralité de pilotes d'imprimantes membres, si l'affichage de l'élément défini d'extension sur un écran de réglage du pilote d'imprimante membre sur lequel un ou plusieurs réglages de l'élément défini d'extension peuvent être définis, peut être commandé par le pilote d'imprimante groupe ;
un moyen d'extraction pour, si l'étape de discrimination discrimine que tous les pilotes d'imprimantes membres comportent l'élément défini d'extension qui peut être commandé par le pilote d'imprimante groupe, extraire, des pilotes d'imprimantes membres, un élément défini commun détenu en commun et un élément défini d'extension, et si l'étape de discrimination ne discrimine pas que tous les pilotes d'imprimantes membres comportent l'élément défini d'extension dont l'affichage peut être commandé par le pilote d'imprimante groupe, extraire, des pilotes d'imprimantes membres, un élément défini commun détenu en commun ;
un moyen de commande pour commander le pilote d'imprimante groupe de manière que l'élément défini commun ou l'élément défini d'extension, extrait par ledit moyen d'extraction, puissent être définis sur un écran de réglage dudit pilote d'imprimante groupe ;
un moyen d'inhibition pour commander un pilote d'imprimante membre de manière que, sur l'écran de réglage du pilote d'imprimante membre sur lequel l'élément défini d'extension peut être commandé par le pilote d'imprimante groupe, la définition d'un ou plusieurs réglages de l'élément défini d'extension sur l'écran de réglage du pilote d'imprimante groupe ne puisse pas être modifiée ;
un moyen d'invalidation pour commander un pilote d'imprimante membre de manière que, si un réglage d'un élément défini commun, défini sur l'écran de réglage du pilote d'imprimante groupe sur lequel un ou plusieurs réglages de l'élément défini commun peuvent être définis, est modifié sur l'écran de réglage du pilote d'imprimante membre sur lequel l'affichage de l'élément défini d'extension ne peut pas être commandé par le pilote d'imprimante groupe, le réglage modifié devienne invalide ; et
un moyen de commande d'impression pour commander la pluralité de pilotes d'imprimantes membres pour exécution de l'impression sur la base d'un réglage d'impression indiqué par le biais de l'écran de réglage du pilote d'imprimante groupe, les données d'impression produites par ledit moyen de commande d'impression étant envoyées aux appareils d'impression correspondant aux pilotes d'imprimantes membres respectifs.

8. Appareil selon la revendication 7, dans lequel ledit moyen d'extraction est configuré pour déterminer si un élément défini d'extension est destiné à être inclus dans l'écran de réglage dudit pilote d'imprimante groupe ou pas, en fonction d'une combinaison de types de ladite pluralité de pilotes d'imprimantes membres.

9. Appareil selon la revendication 8, comprenant, en outre, un moyen d'obtention pour obtenir, à partir de chaque pilote de ladite pluralité de pilotes d'imprimantes membres, des informations indiquant si l'élément défini d'extension du pilote d'imprimante membre peut être commandé par le pilote d'imprimante groupe, ledit moyen d'extraction étant configuré pour exécuter un processus d'extraction sur la base des informations obtenues par le moyen d'obtention.

10. Appareil selon l'une quelconque des revendications 7 à 9, comprenant, en outre, un moyen de conflit pour inclure l'élément défini commun en tant qu'élément défini commun duquel peuvent être définis un ou plusieurs réglages sur l'écran de réglage dudit pilote d'imprimante groupe.

11. Appareil selon l'une quelconque des revendications 7 à 10, comprenant, en outre, un moyen de commande d'affichage pour la commande d'un affichage d'un écran de réglage de pilote d'imprimante membre pour définir l'élément défini d'extension ou l'élément défini commun du pilote d'imprimante membre indiqué à partir d'un pilote de ladite pluralité de pilotes d'imprimantes membres, les éléments défini d'extension ou défini commun affichés sur l'écran de réglage de pilote d'imprimante membre comprenant les éléments défini d'extension ou défini commun non extraits par ledit moyen d'extraction sous une forme telle qu'un ou plusieurs de leurs réglages puissent être définis.

12. Appareil selon l'une quelconque des revendications 7 à 11, comprenant, en outre, un moyen de conflit pour inclure l'élément défini commun en tant qu'élément défini commun qui peut être défini sur l'écran de réglage dudit pilote d'imprimante groupe indépendamment pour l'élément défini commun et pour l'élément défini d'extension.

13. Programme de commande d'impression qui, lorsqu'il est exécuté par un appareil de traitement d'informations, amène l'appareil à mettre en oeuvre le procédé selon l'une quelconque des revendications 1 à 6.

14. Support mémoire pouvant être lu par ordinateur, qui stocke un programme de commande d'impression selon la revendication 13.
